# EUROPEAN PATENT APPLICATION

(11) **EP 4 513 597 A1**
(43) Date of publication of application: **26.02.2025**
(21) Application number: 22966275.4
(22) Date of filing: 25.11.2022
(51) Int. Cl.: H01M 4/587, H01M 4/36, H01M 4/133

(54) **CARBON MATERIAL AND PREPARATION METHOD THEREFOR, RECHARGEABLE BATTERY CONTAINING CARBON MATERIAL, AND ELECTRIC APPARATUS**

(71) Applicant: Contemporary Amperex Technology (Hong Kong) Limited, Central, Central And Western District (HK)
(72) Inventor: LI, Yuanyuan, Ningde, Fujian 352100 (CN); SHEN, Rui, Ningde, Fujian 352100 (CN); HE, Libing, Ningde, Fujian 352100 (CN)
(74) Representative: Kraus & Lederer PartGmbB
(86) International application number: PCT/CN2022/134473
(87) International publication number: WO 2024/108587

(57) **Abstract**

The present application provides a carbon material, a method for preparing the same, and a secondary battery and an electrical device comprising the same. The carbon material includes a pore structure, wherein the carbon material satisfies 0.150 ≤ I_{D}/I_{G} ≤ 0.280, with I_{D} indicating an intensity of the D peak of the Raman spectrum at 1350±50 cm⁻¹ and I_{G} indicating an intensity of the G peak of the Raman spectrum at 1580±50 cm⁻¹. The carbon material provided in the present application can make the secondary battery have high initial columbic efficiency, high energy density, good cycling performance and storage performance.

## Description

### TECHNICAL FIELD

The present application belongs to the field of battery technology, and specifically relates to a carbon material and the method for preparing the same, and a secondary battery and an electrical device comprising the same.

### BACKGROUND

In recent years, secondary batteries have been widely used in energy storage power systems such as hydro, thermal, wind and solar power plants, as well as electric tools, electric bicycles, electric motorcycles, electric vehicles, military equipment, aerospace and many other fields. With the application and promotion of secondary batteries, people have put forward serious challenges to the performance of secondary batteries, such as the requirement that secondary batteries need to have various performance such as energy density and service life. Negative electrode active materials are important components of secondary batteries, which affect the performance of secondary batteries. Currently, the negative electrode active material mainly includes graphite, however, the problem faced in the existing technology is that, high-capacity graphite is difficult to have high initial coulombic efficiency, and it is also difficult to make secondary batteries combine good cycling performance and storage performance.

### SUMMARY

The present application is intended to provide a carbon material, a method for preparing the same, and a secondary battery and an electrical device comprising the same. The carbon material provided in the present application can make the secondary battery have high initial columbic efficiency, high energy density, good cycling performance and storage performance.

A first aspect of the present application provides a carbon material comprising a pore structure, wherein the carbon material satisfies 0.150 ≤ I_{D}/I_{G} ≤ 0.280, with I_{D} indicating an intensity of the D peak of the Raman spectrum at 1350±50 cm⁻¹ and I_{G} indicating an intensity of the G peak of the Raman spectrum at 1580±50 cm⁻¹.

The carbon material provided in the present application can effectively reduce the irreversible capacity loss of the secondary battery, improve the capacity exertion characteristics of the secondary battery, and enable the secondary battery to have high initial coulombic efficiency, high energy density, good cycling performance and storage performance.

In some embodiments of the present application, 0.152 ≤ I_{D}/I_{G} ≤ 0.280, optionally 0.155 ≤ I_{D}/I_{G} ≤ 0.220. When the I_{D}/I_{G} of the carbon material is further adjusted to be within the above ranges, the secondary battery can be made to better have high initial coulombic efficiency, high energy density, good cycle performance and storage performance.

In some embodiments of the present application, the carbon material comprises more than one pore structure having a pore area greater than or equal to 0.15 µm², optionally comprising more than one pore structure having a pore area of 0.15 µm²-2.0 µm². When the carbon material comprises a pore structure having the above pore area, the pore structure can reserve the required expansion space for the volume change of the carbon material particles, whereby the risk of the carbon material particles breaking up to produce a new interface can be further reduced, which in turn can reduce the occurrence of side reactions, reduce the irreversible capacity loss of the secondary battery, and improve the cycling performance and storage performance of the secondary battery.

In some embodiments of the present application, the carbon material comprises an external region and an internal region disposed on the inside of the external region, the external region being a region formed by extending for a distance of 0.25L from the surface of the particles of the carbon material towards the interior of the particles, L being a short-axis length of the particles of the carbon material; total pore area of the external region being denoted as S₁ and total pore area of the internal region being denoted as S₂, and S₂ > S₁.

In some embodiments of the present application, 1.5 ≤ S₂/S₁ ≤ 450, optionally 2 ≤ S₂/S₁ ≤ 400.

When S₂/S₁ is within the above range, the secondary battery can better balance the high initial columbic efficiency, high energy density, good cycling performance and storage performance.

In some embodiments of the present application, 0.01µm² ≤ S₁ ≤ 5.0µm², optionally 0.02µm² ≤ S₁ ≤ 4.5µm². When the total pore area of the external region is within the above range, on the one hand, the carbon material particles can have a more stable structure, avoiding infiltration of the electrolytic solution into the pore structure inside the carbon material particles as much as possible, thereby reducing the side reactions and reducing the consumption of active ions by SEI film formation inside the carbon material particles. On the other hand, the transport performance of active ions and electrons will not be affected.

In some embodiments of the present application, 2.5µm² ≤ S₂ ≤ 25.0µm², optionally 3.0µm² ≤ S₂ ≤ 22.5µm². When the total pore area of the internal region is within the above range, on the one hand, sufficient and stable expansion space can be reserved for the volume change of the carbon material particles, thereby reducing the risk of the fragmentation of the carbon material particle to generate new interfaces, reducing the side reactions on the new interface surface, and reducing the consumption of active ions by SEI film formation on the new interface surface. On the other hand, the capacity and initial columbic efficiency of carbon materials can be improved.

In some embodiments of the present application, L ≥ 4 µm, optionally 4 µm ≤ L ≤ 20 µm.

In some embodiments of the present application, the pore structure in the external region of the carbon material has an area of less than or equal to 0.15 µm², optionally less than or equal to 0.10 µm². By controlling the area of the pore structure in the external region of the carbon material within the above range, the external region of the carbon material can have a dense structure, which can effectively improve the structural stability of the carbon material, avoid electrolytic solution infiltration into the pore structure inside the carbon material particles as much as possible, and thus effectively improve the cycling performance and storage performance of the secondary battery.

In some embodiments of the present application, the internal region of the carbon material includes more than one pore structure having an area of greater than or equal to 0.15 µm², optionally more than one pore structure having an area of from 0.15 µm² to 2.0 µm². By including the pore structure with the above mentioned area in the internal region of the carbon material, sufficient and stable expansion space can be reserved for the volume change of the carbon material particles, thereby reducing the risk of the carbon material particle fragmentation. On the other hand, the compaction density of carbon materials can be improved.

In some embodiments of the present application, the interlayer spacing of the external region of the carbon material is denoted as d₁, the interlayer spacing of the internal region of the carbon material is denoted as d₂, and the carbon material satisfies d₁ ≥ d₂, optionally d₁ > d₂. When the interlayer spacing of the external region of the carbon material is larger, it is more conducive to the rapid intercalation and deintercalation of active ions, thereby further improving the dynamic performances of the secondary battery. When the interlayer spacing in the internal region of the carbon material is smaller, it is more conducive to improving the specific capacity and compaction density of the carbon material, thereby further enhancing the energy density of the secondary battery.

In some embodiments, d₁ is from 0.33565 nm to 0.33620 nm.

In some embodiments, d₂ is from 0.33557 nm to 0.33589 nm.

In some embodiments of the present application, the carbon material has a specific surface area of ≤ 2.1m²/g, optionally from 0.7 m²/g to 1.8 m²/g. The carbon material of the present application has a relatively low specific surface area and relatively low surface activity, which can reduce the consumption of active ions in SEI film formation, improve the initial columbic efficiency of the carbon material, and further improve the cycling performance and storage performance of the secondary battery.

In some embodiments of the present application, the carbon material has a volume distribution particle size Dv50 of from 6.0 µm to 30.0 µm, optionally from 8.0 µm to 25.0 µm.

In some embodiments of the present application, the carbon material has a volume distribution particle size Dv90 of from 16.0 µm to 45.0 µm, optionally from 17.0 µm to 42.0 µm.

When the volume distribution particle sizes Dv50 and/or Dv90 of carbon materials are within the above range, it is beneficial to improving the transport performance of active ions and electrons, thereby further improving the cycling and dynamic performances of the secondary battery.

In some embodiments of the present application, the carbon material has a particle size distribution (Dv90-Dv10)/Dv50 of ≤1.55, optionally from 0.5 to 1.50. Thus it is conductive improving the compaction density of carbon materials, which can further enhance the energy density of the secondary battery.

In some embodiments of the present application, the carbon material has a powder resistivity under a pressure of 8 MPa of from 0.006 Ω.cm to 0.051 Ω.cm, optionally from 0.010 Ω.cm to 0.040 Ω.cm. When the powder resistivity of the carbon material is within the above range, it is conductive to enhancing the electron transmission performance, so as to be able to further enhance the cycling performance and dynamic performance of the secondary battery.

In some embodiments of the present application, the carbon material has a powder compaction density under a pressure of 20000N of 1.70 g/cm³ to 1.95 g/cm³, optionally from 1.72g/cm³ to 1.92g/cm³. When the powder compaction density of the carbon material is within the above range, the compaction density of the negative electrode plate can be improved, and the energy density of the secondary battery can be improved, and it is further conducive to improving the transport performance of active ion and electron, and thus improving the cycling performance and the dynamic performance of the secondary battery.

In some embodiments of the present application, the carbon material has a tap density of from 0.8g/cm³ to 1.35g/cm³, optionally from 0.85g/cm³ to 1.30g/cm³. When the tap density of the carbon material is within the above range, the compaction density of the negative electrode plate can be increased, thereby increasing the energy density of the secondary battery. Moreover, it is conductive to enhancing the active ion and electron transport performance, and the cycling and dynamic performances of the secondary battery can be improved.

In some embodiments of the present application, the carbon material has a specific capacity of from 350mAh/g to 372mAh/g, optionally from 353mAh/g to 371mAh/g. When the specific capacity of the carbon material is within the above range, the energy density of the secondary battery can be improved.

In some embodiments of the present application, the carbon material has a graphitization degree of from 92.0% to 98.0%, optionally from 92.5% to 97.6%. When the graphitization degree of carbon materials is within the above range, it is beneficial for secondary batteries to balance high energy density, good cycling performance, storage performance, and dynamic performance.

In some embodiments of the present application, the morphology of the carbon material includes one or more of blocky, spherical, and quasi-spherical shapes.

A second aspect of the present application provides a method for preparing a carbon material, comprising the following steps: Step 1, providing a raw material having multiple pore structures; Step 2, mixing the raw material with a filling material in a predetermined ratio homogeneously, and then holding at a first temperature T₁ for a first time t₁ to obtain an intermediate; Step 3, holding the obtained intermediate at a second temperature T₂ for a second time t₂ to obtain a carbon material, wherein the carbon material comprises a pore structure, wherein the carbon material satisfies 0.150 ≤ I_{D}/I_{G} ≤ 0.280, with I_{D} indicating an intensity of the D peak of the Raman spectrum at 1350±50 cm⁻¹ and I_{G} indicating an intensity of the G peak of the Raman spectrum at 1580±50 cm⁻¹.

In some embodiments of the present application, the raw material includes natural graphite, optionally the natural graphite includes one or more of flake graphite, natural spherical graphite, and microcrystalline graphite.

In some embodiments of the present application, the raw material has a volume distribution particle size Dv50 of from 6.0 µm to 30.0 µm, optionally from 8.0 µm to 25.0 µm.

In some embodiments of the present application, the raw material has a specific surface area of ≥ 2.5 m²/g, optionally from 2.5 m²/g to 10.0 m²/g.

In some embodiments of the present application, the filling material has a softening point of from 100°C to 180°C, optionally from 120°C to 160°C.

In some embodiments of the present application, the filling material has a coking value of from 25% to 50%, optionally from 30% to 42%.

In some embodiments of the present application, the filling material has a volume distribution particle size Dv50 of less than or equal to 6 µm, optionally from 1 µm to 5 µm.

In some embodiments of the present application, the filling material comprises one or more of coal asphalt, petroleum asphalt, polymer compounds and resins, optionally one or more of coal asphalt and petroleum asphalt.

In some embodiments of the present application, a mass ratio of the filling material to the raw material is (10-32): 100, optionally (15-25): 100.

By adjusting parameters such as the type of filling material, softening point, coking value, and addition amount within the above range, the filling material does not have a high viscosity after being heated and melted, maintains good fluidity, and at the same time is not easily bonded to the raw material particles, and is able to reduce the agglomeration of the raw material particles in the subsequent preparation, and thus is able to reduce the problems of increased surface defects and increased surface active sites of carbon material particles due to depolymerization processes.

In some embodiments of the present application, after mixing the raw material and filling material in a predetermined proportion homogeneously, they are heated to the first temperature T₁ by a staged heating process, optionally including a first heating process, a second heating process and a third heating process.

In some embodiments of the present application, the first heating process is carried out by heating to a temperature of from 200°C to 250°C and holding at this temperature for 1 to 2 hours.

In some embodiments of the present application, the second heating process is carried out by heating to a temperature of from 450°C to 550°C and holding at this temperature for 1 to 2 hours.

In some embodiments of the present application, the third heating process is carried out by heating to the first temperature T₁ and holding at the first temperature T₁ for a first time t₁.

In some embodiments of the present application, it is heated to the first temperature T₁ at a rate of 1°C/min-10°C/min.

In some embodiments of the present application, the first temperature T₁ is from 700°C to 1200°C, optionally from 720 to 1100°C.

In some embodiments of the present application, the first time t₁ is from 1 hour to 5 hours, optionally from 2 hours to 4 hours.

By adjusting one or more of the factors such as the heating rate, the first temperature, the first time, and the heating process to be within the above ranges, it is conductive to preparing the carbon material having the desired structure.

In some embodiments of the present application, the second temperature T₂ is from 1800°C to 2600°C, optionally from 1900°C to 2450°C.

In some embodiments of the present application, the second time t₂ is from 1.5h to 6h, optionally from 2h to 5h.

By adjusting the second temperature and/or the second time to be within the above range, it is advantageous to adjust the content of disordered carbon in the carbon material within a suitable range, it is advantageous to make the I_{D}/I_{G} of the carbon material within a suitable range, and it is also advantageous for the carbon material to satisfy S₂/S₁ in a suitable range.

A third aspect of the present application provides a secondary battery, comprising a negative electrode plate comprising the carbon material according to the first aspect of the present application or the carbon material prepared by the method according to the second aspect of the present application.

A fourth aspect of the present application provides an electrical device, comprising the secondary battery according to the third aspect of the present application.

The carbon material provided in the present application can effectively reduce the irreversible capacity loss of the secondary battery, improve the capacity exertion characteristics of the secondary battery, and enable the secondary battery to combine a high initial coulombic efficiency, a high energy density, and a good cycling performance and storage performance. The electrical device of the present application includes the secondary battery provided in the present application and thus has at least the same advantages as the secondary battery.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.
FIG. 1 is a Raman spectrum of a carbon material according to an embodiment of the present application.
FIG. 2 is a schematic diagram of a cross-sectional image of a particle of a carbon material of the present application.
FIG. 3 is a schematic diagram of a secondary battery according to an embodiment of the present application.
FIG. 4 is an exploded view of a secondary battery according to the embodiment of the present application.
FIG. 5 is a schematic diagram of a battery module according to an embodiment of the present application.
FIG. 6 is a schematic diagram of a battery pack according to an embodiment of the present application.
FIG. 7 is an exploded view of the battery pack according to the embodiment of the present application as shown in FIG. 6.
FIG. 8 is a schematic diagram of an electrical device according to an embodiment of the present application using the secondary battery of the present application as power.

The drawings are not drawn to actual scale. Reference numerals are as follows: 1. Battery pack; 2. Upper box body; 3. Lower box body; 4. Battery module; 5. Secondary battery; 51. Casing; 52. Electrode assembly; 53. Cover plate; 100. Carbon material; 101. External region; 102. Internal region.

### DETAILED DESCRIPTION

Hereinafter, embodiments of a carbon material and a method for preparing the same, and a secondary battery and an electrical device comprising the same according to the present application will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise/comprising", "include/including", and "contain/containing" mentioned in the present application mean that it is drafted in an open mode, or it may also mean a close mode. For example, the transition phases "comprise/comprising", "include/including", and "contain/containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

Unless stated otherwise, the terms used in the present application have the well-known meanings commonly understood by those skilled in the art.

Unless stated otherwise, the values of the parameters mentioned in the present application may be determined by various test methods commonly used in the art, for example, according to the test methods given in the present application.

Unless stated otherwise, in the present application, the term "active ions" refers to ions, including but not limited to lithium ions, that can be intercalated and deintercalated back and forth between the positive electrode and the negative electrode of the secondary battery.

In the present application herein, the terms "multiple" and "more than one" mean two or more, unless otherwise stated and specifically limited.

According to different preparation processes or sources, graphite can be divided into artificial graphite and natural graphite. The artificial graphite generally is prepared by a high temperature graphitization process, resulting in high energy consumption and high cost. Thus, the artificial graphite has a higher cost. Natural graphite originates from nature and thus has the advantage of relatively low cost. In addition, natural graphite has the advantages of high capacity.

Natural graphite mainly includes flake graphite, natural spherical graphite, and microcrystalline graphite. Unlike artificial graphite, natural graphite particles have a lot of pores and defects in the inside and the outside the particles. During the first charging process of the secondary battery, there are many side reactions between the electrolytic solution and the pores on the surface and inside the particles, resulting in high irreversible capacity loss, low initial columbic efficiency, poor cycling performance and storage performance of the secondary battery. Specifically, flake graphite and natural spherical graphite have high crystallinity and graphitization degree, and have mostly layered microstructure. Such structure leads to significant volume changes in natural graphite during the intercalation and deintercalation of active ions, which is likely to cause the fragmentation of graphite layered structure and particles. After the fragmentation of the particles, the exposed fresh surface will continue to react with the electrolytic solution, which will further increase the irreversible capacity loss of the secondary battery.

At present, the performance of natural graphite is mainly improved through particle surface cladding treatment and/or particle internal filling treatment.

The cladding treatment of particle surfaces mainly involves mixing natural graphite and a cladding agent (such as asphalt and polymer compounds) evenly before heat treating to clad the surface of natural graphite particles with a layer of amorphous carbon, which can slightly repair the defects on the particle surface. However, the inventors of the present application found during the research process that the amorphous carbon layer clad on the surface can lead to a decrease in the specific capacity and/or compaction density of natural graphite, affecting the energy density of the secondary battery. At the same time, the surface defects of the particles remained high after the cladding with amorphous carbon layer on the surface; in addition, the amorphous carbon layer clad on the surface cannot effectively prevent the electrolytic solution from infiltrating into the pore structure inside the particles, resulting in limited improvement in the initial columbic efficiency, cycling performance and/or storage performance of the secondary battery.

The internal filling treatment of the particles mainly involves mixing natural graphite with filling agents (such as asphalt, polymer compounds, etc.), and filling the filling agent into the internal pores of particles through preset pressure, vacuuming, and heating, so as to obtain natural graphite without pores inside the particles. However, the inventors of the present application have found during the research that the large amount of carbon (in particular soft carbon) in the internal of the particles leads to a decrease in the specific capacity and compaction density of natural graphite, which affects the energy density of the secondary battery. At the same time, because all the pores inside the natural graphite particles are filled with carbon, the volume of natural graphite changes greatly during the intercalation and deintercalation of active ions, which will render the particles more prone to breaking and further lead to repeated destruction and reconstruction of the SEI film on the surface of the particles; as a result, the consumption of active ions increases, the irreversible capacity loss of the secondary battery increases, and the service life of the secondary battery becomes short. In the existing technologies, the surface of natural graphite, without any pores inside the particles thereof, will be covered with a layer of amorphous carbon, which will lead to further reducing of the specific capacity and/or compaction density of natural graphite, and at this time, there are still many defects on the surface of the particles, and thus the service life of the secondary battery cannot be effectively improved.

Therefore, the irreversible capacity loss of secondary batteries are reduced and the initial columbic efficiency of secondary batteries is increased to some extent by means of the surface cladding treatment and/or internal filling treatment of modified natural graphite particles. Nevertheless, the improvement on the initial columbic efficiency of secondary batteries is limited and the energy density of secondary batteries will lose. In addition, the capacity exertion characteristics of the secondary battery during cycling and storage process remains poor.

In view of this, the inventors of the present application have proposed, after extensive research, a new type of carbon material, which combines high specific capacity, high initial coulombic efficiency, and small volume change, and also enables the secondary battery to have high initial coulombic efficiency, high energy density, good cycling performance and storage performance.

### Carbon Material

In the first aspect, the present application provides a carbon material comprising a pore structure, wherein the carbon material satisfies 0.150 ≤ I_{D}/I_{G} ≤ 0.280, with I_{D} indicating an intensity of the D peak of the Raman spectrum at 1350±50 cm⁻¹ and I_{G} indicating an intensity of the G peak of the Raman spectrum at 1580±50 cm⁻¹.

The carbon material provided in the present application can effectively reduce the irreversible capacity loss of the secondary battery, improve the capacity exertion characteristics of the secondary battery, and enable the secondary battery to have high initial coulombic efficiency, high energy density, and good cycling performance and storage performance. Possible reasons for this include at least the following:

The carbon material provided in the present application comprises a pore structure. In the present application, "the carbon material comprises a pore structure" means that the carbon material has a pore structure that can be directly observed from a cross-sectional image (e.g., a scanning electron microscope image with a magnification of 1000 times), i.e., the pore structure in the raw material used to prepare the carbon material is not completely filled. As a result, the pore structure in the carbon material can reserve the required expansion space for the volume change of the carbon material particles, whereby the risk of the carbon material particles breaking up to produce a new interface can be reduced, thereby reducing the occurrence of side reactions, reducing the irreversible loss of capacity of the secondary battery, and improving the cycling performance and storage performance of the secondary battery.

The carbon material provided in the present application satisfies 0.150 ≤ I_{D}/I_{G} ≤ 0.280. I_{D}/I_{G} can reflect the degree of disorder in the surface layer of the carbon material, and the smaller the ID/IG, the less the content of disordered carbon on the surface of the particles of the carbon material, the fewer the number of active sites on the surface of the particles, and the less the irreversible depletion of active ions. However, the inventors of the present application found in the research process that the content of disordered carbon is not the less the better, and when its content is excessively small, the crystallinity and graphitization degree of the carbon material are very high, which is not conducive to the rapid intercalation and deintercalation of the active ions; and at the same time, the volume change of the carbon material in the charging and discharging process of the secondary battery is also large, which increases the risk of the fragmentation of the carbon material particles, w which in turn leads to the SEI film on the surface of the particles being susceptible to repeated destruction and reconstruction, further increasing the irreversible consumption of active ions, increasing the irreversible capacity loss of the secondary battery, and shortening the service life of the secondary battery. In further research, the inventors found that when the carbon material satisfies 0.150 ≤ I_{D}/I_{G} ≤ 0.280, on the one hand, it can effectively reduce the content of disordered carbon, lower the surface activity of the carbon material, and reduce the consumption of active ions by the formation of the SEI film on the surface of the particles, and on the other hand, it can also enable the carbon material to have a stable structure, avoiding the fragmentation of the particles as much as possible.

Therefore, when the carbon material comprises the pore structure and satisfies 0.150 ≤ I_{D}/I_{G} ≤ 0.280, the carbon material has a small volume expansion, a high structural stability and a low surface activity, thus the carbon material can have a higher specific capacity, a higher initial coulombic efficiency, and a smaller volume change, and can also enable the secondary battery to have a high initial coulombic efficiency, a high energy density, and a good cycling performance and storage performance.

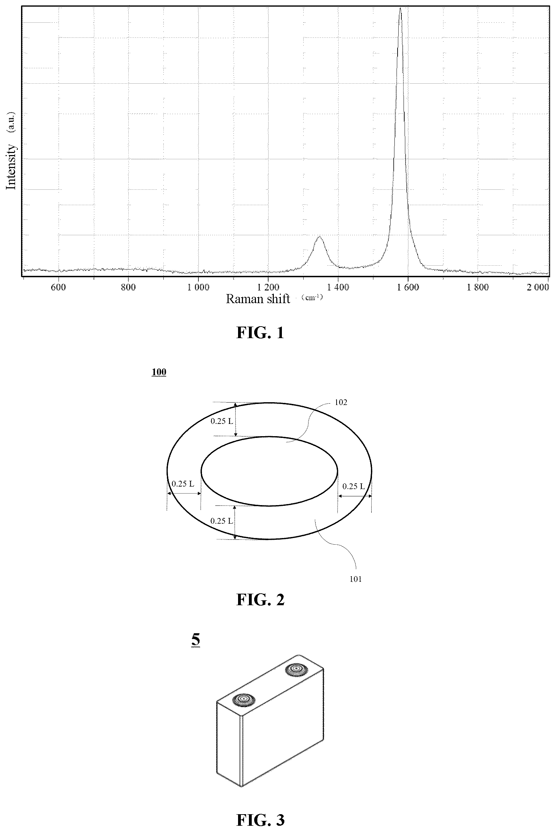

FIG. 1 is a Raman spectrum of a carbon material according to an embodiment of the present application, in which I_{D} indicates an intensity of the D peak of the Raman spectrum at 1350±50 cm⁻¹ and I_{G} indicates an intensity of the G peak of the Raman spectrum at 1580±50 cm⁻¹. In the present application, I_{D}/I_{G} can be denoted by a ratio of the intensity of the D peak of the Raman spectrum to the intensity of the G peak of the Raman spectrum.

In some embodiments, the I_{D}/I_{G} may be 0.155, 0.160, 0.170, 0.180, 0.190, 0.200, 0.210, 0.220, 0.230, 0.240, 0.250, 0.260, 0.270, 0.280, or in a range composed of any of the above values. Optionally, 0.152 ≤ I_{D}/I_{G} ≤ 0.280, 0.152 ≤ I_{D}/I_{G} ≤ 0.260, 0.155 ≤ I_{D}/I_{G} ≤ 0.240, 0.155 ≤ I_{D}/I_{G} ≤ 0.220, 0.155 ≤ I_{D}/I_{G} ≤ 0.200, 0.155 ≤ I_{D}/I_{G} ≤ 0.180. The inventors have found in further research that when further adjusting the I_{D}/I_{G} of the carbon material within the above ranges, it is possible to make the secondary battery better balance high initial coulombic efficiency, high energy density, and good cycling performance and storage performance.

In some embodiments, the carbon material comprises more than one pore structure having a pore area greater than or equal to 0.15 µm², optionally more than one pore structure having a pore area of 0.15 µm²-2.0 µm². When the carbon material comprises a pore structure having the above pore area, the pore structure can reserve the required expansion space for the volume change of the carbon material particles, whereby the risk of the carbon material particles breaking up to produce a new interface can be further reduced, which in turn can reduce the occurrence of side reactions, reduce the irreversible loss of capacity of the secondary battery, and improve the cycling performance and storage performance of the secondary battery.

In some embodiments, the carbon material comprises an external region and an internal region disposed on the inside of the external region, the external region being a region formed by extending for a distance of 0.25L from the surface of the particles of the carbon material towards the interior of the particles, L being a short-axis length of the particles of the carbon material; total pore area of the external region being denoted as S₁ and total pore area of the internal region being denoted as S₂, and S₂ > S₁.

When the carbon material further satisfies S₂ > S₁, the carbon material particles further has the following features: a high number of pores and/or a large pore size in the internal region and a low number of pores and/or a small pore size in the external region. The pore structure in the internal region can reserve the required expansion space for the volume change of the carbon material particles, thereby reducing the risk of a new interface arising from the fragmentation of the carbon material particles, thereby reducing the occurrence of side reactions, reducing the irreversible capacity loss of the secondary battery, and improving the cycling performance and storage performance of the secondary battery; the number of pores in the external region of the carbon material particles is lower and/or the size of the pores is smaller, whereby the carbon material particles can be made to have a more stable structure, and electrolytic solution penetration into the internal pore structure of the carbon material particles can be avoided as much as possible, thereby being able to reduce the occurrence of side reactions, reduce the consumption of active ions for the formation of the SEI film inside the particles, and thus be able to enhance the initial coulombic efficiency of the carbon material and further improve the cycling performance and storage performance of the secondary battery.

Optionally, 1.5 ≤ S₂/S₁ ≤ 450, 2 ≤ S₂/S₁ ≤ 400, 2.5 ≤ S₂/S₁ ≤ 300, 2.5 ≤ S₂/S₁ ≤ 250, 2.5 ≤ S₂/S₁ ≤ 200, 2.5 ≤ S₂/S₁ ≤ 150, 2.5 ≤ S₂/S₁ ≤ 100, 2.5 ≤ S₂/S₁ ≤ 50. The inventors have found through further research that when S₂/S₁ further satisfies the above range, the secondary battery can better balance the high initial columbic efficiency, high energy density, good cycling performance and storage performance.

In some embodiments, 0.01µm² ≤ S₁ ≤ 5.0µm², optionally 0.02µm² ≤ S₁ ≤ 4.5µm², 0.03µm² ≤ S₁ ≤ 4µm², 0.04µm² ≤ S₁ ≤ 3.5µm², 0.05µm² ≤ S₁ ≤ 3µm², 0.05µm² ≤ S₁ ≤ 2.5µm², 0.05µm² ≤ S₁ ≤ 2µm². When the total pore area of the external region is within the above range, on the one hand, the carbon material particles can have a more stable structure, avoiding electrolytic solution to infiltrate into the pore structure inside the carbon material particles as much as possible, thereby reducing the side reactions and reducing the consumption of active ions by SEI film formation inside the carbon material particles. On the other hand, the transport performance of active ions and electrons will not be affected.

In some embodiments of the present application, 2.5µm² ≤ S₂ ≤ 25.0µm², optionally 3.0µm² ≤ S₂ ≤ 22.5µm², 3.0µm² ≤ S₂ ≤ 20µm², 3.0µm² ≤ S₂ ≤ 18µm², 3.0µm² ≤ S₂ ≤ 16µm², 3.0µm² ≤ S₂ ≤ 14µm², 3.0µm² ≤ S₂ ≤ 12µm², 3.0µm² ≤ S₂ ≤ 10µm², 3.0µm² ≤ S₂ ≤ 8µm². When the total pore area of the internal region is within the above range, on the one hand, sufficient and stable expansion space can be reserved for the volume change of the carbon material particles, thereby reducing the risk of the carbon material particle fragmentation to generate new interfaces, reducing the side reactions on the new interface surface, and reducing the consumption of active ions by SEI film formation on the new interface surface. On the other hand, the capacity and initial columbic efficiency of carbon materials can be improved.

In the present application, the total pore area S₁ of the external region and the total pore area S₂ of the internal region of the carbon material can be obtained by testing a cross-sectional image of the carbon material.

In the present application, the cross-sectional image of the carbon material includes a cross-sectional image passing through a particle center of the carbon material. "Particle center" means an area within a radius extending 0.1 µm from a geometric center of the particle toward the surface of the particle.

In the present application, the short axis length of the particle is the minimum value when a line connecting two points on the surface of the particle passes through the geometric center of the particle.

FIG. 2 is a schematic diagram of a cross-sectional image of a particle of the carbon material 100 of the present application, and the cross-sectional image passes through the particle center of the carbon material 100. As shown in FIG. 2, L denotes a short-axis length of a particle of the carbon material 100, and a region formed by extending for a distance of 0.25L from the surface of the particle of the carbon material 100 toward the interior of the particle is the external region 101, and the region inside the external region 101 is the internal region 102.

A cross-section of the carbon material can be prepared using a cross section polisher (e.g., an argon ion Cross Section Polisher IB-09010 CP from JEOL Company of Japan); the cross-section of the carbon material is then scanned using a scanning electron microscope (e.g., a Sigma 300 scanning electron microscope from e ZEISS Company of Germany) with reference to JY/T010-1996; and the cross-section of the carbon material is finally scanned by an image processing software (e.g., AVIZO) to calculate the total pore area S₁ of the external region and the total pore area S₂ of the internal region of the carbon material.

In some embodiments, the short-axis length L of the carbon material satisfies L ≥ 4 µm, optionally 4µm ≤ L ≤ 25µm, 4µm ≤ L ≤ 20µm, 6µm ≤ L ≤ 20µm, 8µm ≤ L ≤ 20µm, 8µm ≤ L ≤ 18µm, 8µm ≤ L ≤ 16µm.

In some embodiments, the pore structure in the external region of the carbon material has an area of less than or equal to 0.15 µm², optionally less than or equal to 0.10 µm². The inventors found in further research that by controlling the area of the pore structure in the external region of the carbon material within the above range, the external region of the carbon material can be made to have a dense structure, whereby the structural stability of the carbon material can be effectively improved to avoid as much as possible the penetration of the electrolytic solution into the pore structure inside the particles of the carbon material, which can then effectively improve the cycling performance and storage performance of the secondary battery. Of course, the present application does not intend to limit that all of the pore structures in the external region of the carbon material have an area of less than or equal to 0.15 µm², for example, it can be controlled that more than 95%, optionally more than 99%, of the pore structures have an area of less than or equal to 0.15 µm², optionally less than or equal to 0.10 µm².

In some embodiments, the internal region of the carbon material includes more than one pore structure having an area of greater than or equal to 0.15 µm², optionally includes more than one pore structure having an area of from 0.15 µm² to 2.0 µm². By including the pore structure with the above mentioned area in the internal region of the carbon material, sufficient and stable expansion space can be reserved for the volume change of the carbon material particles, thereby reducing the risk of breakup of the carbon material particles. On the other hand, the compaction density of carbon materials can be improved.

In some embodiments, the interlayer spacing of the external region of the carbon material is denoted as d₁, the interlayer spacing of the internal region of the carbon material is denoted as d₂, and the carbon material satisfies d₁ ≥ d₂, optionally d₁ > d₂.

When the interlayer spacing of the external region of the carbon material is larger, it is more conducive to the rapid intercalation and deintercalation of active ions, thereby further improving the dynamic performances of the secondary battery. When the interlayer spacing in the internal region of the carbon material is smaller, it is more conducive to improving the specific capacity and compaction density of the carbon material, thereby further enhancing the energy density of the secondary battery.

In some embodiments, d₁ is from 0.33565 nm to 0.33620 nm.

In some embodiments, d₂ is from 0.33557 nm to 0.33589 nm.

The interlayer spacing of different regions of carbon materials can be tested using instruments and methods known in the art. For example, High-Resolution Transmission Electron Microscopy (HRTEM) can be used for testing. The test instrument may be Spectra S/TEM Scanning Transmission Electron Microscope from Thermo Fisher Scientific.

In some embodiments, the morphology of the carbon material includes one or more of blocky, spherical, and quasi-spherical shapes. This is thereby conducive to improving the compaction density of the negative electrode plate, and thereby enhancing the energy density of the secondary battery.

In some embodiments, the carbon material comprises primary particles, and the quantity proportion of the primary particles in the carbon material is greater than or equal to 50%, for example, 55%-95%, 60%-100%, 65%-90%, 65%-80%, 70%-100%, 75%-90%, 80%-100%, 90%-100%, or 95%-100%. When the carbon material comprises an appropriate proportion of primary particles, it can be made to have high structural stability and reduce the occurrence of side reactions, and in addition, the compaction density of the negative electrode film can be enhanced, thereby enhancing the energy density of the secondary battery.

In some embodiments, all the carbon materials may be primary particles, i.e., the quantity proportion of the primary particles in the carbon materials is 100%.

In the present application, both primary particles and secondary particles have meanings well known in the art. Primary particles are particles in a non-agglomerated state. Secondary particles are particles in an agglomerated state formed by the aggregation of two or more primary particles. Primary particles and secondary particles can be distinguished by using scanning electron microscope (SEM) images.

In the present application, the quantity proportion of primary particles in the carbon material refers to the average of statistical results obtained by: taking randomly a test sample from the negative electrode film, taking randomly a plurality of test areas in the test sample, obtaining images of the plurality of test areas using a scanning electron microscope, and counting the proportion of the number of primary particles in the carbon material in each image to the total number of particles in the carbon material to obtain the average of the plurality of statistical results as the quantity proportion of primary particles in the carbon material.

In some embodiments of the present application, the carbon material has a graphitization degree of from 92.0% to 98.0%, optionally from 92.5% to 97.6%. When the graphitization degree of carbon materials is within the above range, it is beneficial for secondary batteries to balance high energy density, good cycling performance, storage performance and dynamic performance.

The graphitization degree of the carbon material has the meaning known in the art, and can be tested by instruments and methods known in the art. For example, the graphitization degree may be tested by an X-ray diffractometer (such as Bruker D8 Discover) with reference to JIS K 0131-1996 and JB/T 4220-2011 to obtain the average interplanar spacing d₀₀₂ of (002) crystal planes in the crystalline structure of the carbon material, and then calculated according to the formula g = (0.344 - d₀₀₂)/(0.344 - 0.3354)×100%. In the above formula, d₀₀₂ is an interplanar spacing of (002) crystal planes in the crystalline structure of the carbon material, expressed in nanometers (nm).

In some embodiments, the carbon material has a specific surface area of ≤ 2.1m²/g, optionally from 0.7 m²/g to 1.8 m²/g, 0.7m²/g-1.7m²/g, 0.7m²/g-1.6m²/g, 0.7m²/g-1.5m²/g, 0.7m²/g-1.4m²/g, 0.7m²/g-1.3m²/g, 0.7m²/g-1.25m²/g. The carbon material of the present application has a relatively low specific surface area and relatively low surface activity, which can reduce the consumption of active ions in SEI film formation, improve the initial columbic efficiency of the carbon material, and further improve the cycling performance and storage performance of the secondary battery.

The specific surface area of the carbon material has a meaning known in the art, and can be measured by instruments and methods known in the art. For example, the specific surface area may be tested by a nitrogen adsorption specific surface area analysis test method with reference to GB/T 19587-2017, and calculated by a BET (Brunauer Emmett Teller) method. The nitrogen adsorption specific surface area analysis test may be performed by a Tri-Star 3020 specific surface area pore size analysis tester from Micromeritics, USA.

In some embodiments, the carbon material has a volume distribution particle size Dv50 of from 6.0 µm to 30.0 µm, optionally from 8.0 µm to 25.0 µm.

In some embodiments, the carbon material has a volume distribution particle size Dv90 of from 16.0 µm to 45.0 µm, optionally from 17.0 µm to 42.0 µm.

When the volume distribution particle sizes Dv50 and/or Dv90 of carbon materials are within the above range, it is beneficial to improving the transport performance of active ions and electrons, thereby further improving the cycling and dynamic performances of the secondary battery.

In some embodiments, the carbon material has a particle size distribution (Dv90-Dv10)/Dv50 of ≤ 1.55, optionally from 0.5 to 1.50. When the particle size distribution (Dv90-Dv10)/Dv50 of the carbon material is within the above range, it is conductive improving the compaction density of carbon materials, which can further enhance the energy density of the secondary battery, and it is also conducive to the formation of a reasonable pore structure between particles of the negative electrode film, so as to improve the cycling performance and dynamic performance of the secondary battery.

In the present application, the volume distribution particle sizes Dv10, Dv50, and Dv90 of the carbon material have the meanings known in the art, which indicate the particle sizes corresponding to when the cumulative volume distribution percentage of the material reaches 10%, 50%, and 90%, respectively, and can be measured by instruments and methods known in the art. For example, it can be determined using a laser particle size analyzer with reference to GB/T 19077-2016. The testing instrument may be a Mastersizer 3000 laser particle size analyzer from Malvern Instruments Ltd. of the United Kingdom.

In some embodiments, the carbon material has a powder resistivity under a pressure of 8 MPa of from 0.006 Ω.cm to 0.051 Ω.cm, optionally from 0.010 Ω.cm to 0.040 Ω.cm. When the powder resistivity of the carbon material is within the above range, it is conductive to enhancing the electron transmission performance, so as to be able to further enhance the cycling performance and dynamic performance of the secondary battery.

The powder resistivity of the carbon material has a meaning that is well known in the art, and can be tested by instruments and methods known in the art. For example, it can be tested by a powder resistivity tester (e.g., ST2722 from Suzhou Lattice Electronics Co., Ltd, or UTM7305 from SUNS) using the four-probe method with reference to GB/T 30835-2014. The exemplary test method is as follows: weigh a certain amount of the sample powder to be tested in a special mold, set the test pressure, and the powder resistivity under different pressures can be obtained. In the present application, the test pressure can be set to 8Mpa.

In some embodiments, the carbon material has a powder compaction density under a pressure of 20000N of 1.70 g/cm³ to 1.95 g/cm³, optionally from 1.72g/cm³ to 1.92g/cm³. When the powder compaction density of the carbon material is within the above range, the compaction density of the negative electrode plate can be improved, and the energy density of the secondary battery can be improved, and it is further conducive to improving the transport performance of active ion and electron, and thus improving the cycling performance and dynamic performance of the secondary battery.

In the present application, the powder compaction density of the carbon material has a meaning that is well known in the art, and can be tested by instruments and methods known in the art. For example, it can be tested by an electronic pressure tester (e.g., type UTM7305) with reference to standard GB/T24533-2009. The exemplary test method is as follows: weigh 1 g of material, add it to a mold with a bottom area of 1.327 cm², press it under a pressure of 2000 kg (corresponding to 20000N), hold the pressure for 30 s, and then release the pressure and hold for 10 s, and then record and calculate to obtain the powder compaction density of the carbon material under a pressure of 20000N.

In some embodiments, the carbon material has a tap density of from 0.80g/cm³ to 1.35g/cm³, optionally from 0.85g/cm³ to 1.30g/cm³. When the tap density of the carbon material is within the above range, the compaction density of the negative electrode plate can be increased, thereby increasing the energy density of the secondary battery. Moreover, it is conductive to enhancing the active ion and electron transport performance, and the cycling and dynamic performances of the secondary battery can be improved.

The tap density of the carbon material has a meaning that is well known in the art, and can be determined using instruments and methods known in the art. For example, it can be determined using a powder tap density tester with reference to GB/T 5162-2006. The test instrument may be Dandong Baxter BT-301.

In some embodiments, the carbon material has a specific capacity of from 350mAh/g to 372mAh/g, optionally from 353mAh/g to 371mAh/g. When the specific capacity of the carbon material is within the above range, the energy density of the secondary battery can be improved.

The specific capacity of the carbon material has a well-known meaning in the art, and can be tested using methods well-known in the art. The exemplary test method is as follows: a carbon material sample is mixed under stirring with styrene butadiene rubber (SBR) as a binder, sodium carboxymethyl cellulose (CMC) as a thickener, and carbon black as a conductive agent in a mass ratio of 96.2: 1.8: 1.2:0.8 in an appropriate amount of deionized water as a solvent, to form a uniform negative electrode slurry; the negative electrode slurry is applied evenly on the surface of copper foil as the negative electrode current collector, and is kept for later use after drying in an oven; ethylene carbonate (EC), methyl ethyl carbonate (EMC), and diethyl carbonate (DEC) are mixed in a volume ratio of 1:1:1 to obtain an organic solvent, and then LiPF₆ is dissolved in the aforementioned organic solvent to prepare an electrolytic solution with a concentration of 1mol/L; afterwards, a metal lithium plate is used as the counter electrode and polyethylene (PE) film is used as the separator, to assemble a CR2430 button battery in an glove box under argon protection; at 25°C, the prepared button battery is first discharged to 0.005V at a constant current of 0.15mA, after standing for 5 minutes, it is discharged to 0.005V at a constant current of 10 µA, then the discharging capacity at the 1^{st} cycle of the button battery is recorded; afterwards, the button battery is charged to 2.0V at a constant current of 0.3mA and the charging capacity is recorded. The ratio of the charging capacity of the button battery to the mass of the carbon material sample is the specific capacity of the carbon material.

### Preparation Method

A second aspect of the present application provides a method for preparing a carbon material, which may be used for preparing the carbon material according to the first aspect of the present application.

The method for preparing a carbon material comprises the following steps: Step 1, providing a raw material having multiple pore structures; Step 2, mixing the raw material with a filling material in a predetermined ratio homogeneously, and then holding at a first temperature T₁ for a first time t₁ to obtain an intermediate; Step 3, holding the obtained intermediate at a second temperature T₂ for a second time t₂ to obtain a carbon material, wherein the carbon material comprises a pore structure, wherein the carbon material satisfies 0.150 ≤ I_{D}/I_{G} ≤ 0.280, with I_{D} indicating an intensity of the D peak of the Raman spectrum at 1350±50 cm⁻¹ and I_{G} indicating an intensity of the G peak of the Raman spectrum at 1580±50 cm⁻¹.

In some embodiments, the raw material for preparing the carbon material includes natural graphite. Optionally, the natural graphite includes one or more of flake graphite, natural spherical graphite, and microcrystalline graphite, more optionally natural spherical graphite.

"Natural spherical graphite" refers to natural graphite having a spherical or spheroidal-like shape, and not all natural graphite particles are controlled to be ideally spherical. In some embodiments, the natural spherical graphite can be obtained by pre-treating the flake graphite to obtain the desired particle size and morphology, optionally the pre-treatment comprising processes such as crushing, grading, spheronization, purification, etc.

In some embodiments, the morphology of the raw material includes one or more of spherical and quasi-spherical shapes.

In some embodiments, the raw material has a volume distribution particle size Dv50 of from 6.0 µm to 30.0 µm, optionally from 8.0 µm to 25.0 µm.

In some embodiments, the raw material has a specific surface area of ≥ 2.5 m²/g, optionally from 2.5 m²/g to 10.0 m²/g. When the specific surface area of the raw material is within the above range, it is favorable to carrying out the subsequent filling treatment and obtain the carbon material with the desired specific surface area, and it is also favorable for the carbon material to have both a high capacity and a high initial coulombic efficiency, and in addition, it is favorable for the carbon material to have better dynamic performance.

By adjusting the particle size (such as volume distribution particle size Dv50 and/or specific surface area) of the raw material within the above range, it is possible to avoid as much as possible the agglomeration of the raw material during subsequent preparation, and thus to avoid as much as possible the increase in surface defects and the increase in the number of surface-active sites due to the fragmentation of the particles.

In some embodiments, the filling material has a volume distribution particle size Dv50 of less than or equal to 6 µm, optionally from 1µm to 6µm, from 1µm to 5µm, from 2µm to 5µm, from 3µm to 5µm, thereby facilitating the filling of the filling material into the pore structure of the raw material after being heated and melted, and also facilitating the improvement of the dispersion uniformity of the filling material and the raw material.

In some embodiments, the filling material has a softening point of from 100°C to 180°C. For example, the softening point of the filling material may be 100°C, 110°C, 120°C, 125°C, 130°C, 135°C, 140°C, 145°C, 150°C, 155°C, 160°C, 165°C, 170°C, 175°C, 180°C or in a range consisting of any two of the above values. Optionally, the filling material has a softening point of 100°C-160°C, 100°C-150°C, 100°C-140°C, 110°C-180°C, 110°C-170°C, 110°C-160°C, 110°C-150°C, 110°C-140°C, 120°C-180°C, 120°C-170°C, 120°C-160°C, 120°C-150°C, 120°C-140°C, 125°C-180°C, 125°C-170°C, 125°C-160°C, 125°C-150°C, 125°C-140°C, 130°C-180°C, 130°C-170°C, 130°C-160°C, 130°C-150°C, 130°C-140°C.

The inventor found in the course of the research that when the softening point of the filling material is within the above range, it is favorable to regulating the size of the pores and/or the number of pores in the external region and the internal region of the carbon material in a suitable range. In addition, the following can be effectively avoided: when the softening point of the filling material is excessively high, the filling material is not easy to flow and fill into the pore structure of the raw material after being heated and melted, thereby not effectively modifying the internal defects of the particles, and not effectively preventing the electrolytic solution from infiltrating into the internal pore structure of the obtained carbon material particles, which then influences the initial coulombic efficiency, the cycling performance and the storage performance of the secondary battery; when the softening point of the filling material is excessively low, the filling material contains more small molecules, and these small molecules are easy to volatilize when heated, so although the filling material is easy to flow and fill into the pore structure of the raw material after being heated and melted, the small molecules in the filling material volatilize when heat treatment is carried out in Step 2 and/or Step 3, which leads to the fact that the actual residual carbon in the filling region is not able to fill in the pore structure of the raw material efficiently, and the effective filling effect is not achieved or the actual residual carbon in the filling area has more pore structures, which in turn fails to reduce the consumption of active ions by the SEI film formation and reduce the irreversible capacity loss of the secondary battery, and also affects the cycling performance and storage performance of the secondary battery.

In some embodiments, the filling material has a coking value of from 25% to 50%, optionally from 30% to 42%. The inventor found in the course of the research that when the coking value of the filling material is within the above range, it is advantageous to regulate the size of the pores and/or the number of the pores in the external region and the internal region of the carbon material within a suitable range.

In some embodiments, the filling material satisfies both a softening point of 120°C-160°C and a coking value of 30%-42%.

In the present application, the coking value of the filling material has a meaning known in the art and can be determined by instruments and methods known in the art. For example, it can be determined with reference to GB/T 8727-2008.

In some embodiments, the filling material comprises one or more of coal asphalt, petroleum asphalt, polymer compounds and resins, optionally one or more of coal asphalt and petroleum asphalt.

In some embodiments of the present application, a mass ratio of the filling material to the raw material is (10-32):100, optionally (12-30):100, (14-28):100, (15-25):100, thereby facilitating the adjustment of the size of the pores and/or the number of pores in the external region and in the internal region of the carbon material to be within a suitable range. In addition, the following can be effectively avoided: when the mass ratio of the filling material to the raw material is excessively small, the dispersion uniformity of the filling material and the raw material may be poor, at which time the filling material is not easy to flow and fill into the pore structure of the raw material after being heated and melted, thereby not effectively modifying the internal defects of the particles, and not effectively preventing the electrolytic solution from infiltrating into the internal pore structure of the obtained carbon material particles, which then influences the initial coulombic efficiency, the cycling performance and the storage performance of the secondary battery; when the mass ratio of filling material to raw material is excessively large, it is easy to cause the internal pore structure of raw material to be completely filled, at which time the volume of carbon material obtained changes greatly, the particles are more prone to break, the consumption of active ions by the SEI film formation increases, and the irreversible capacity loss of the secondary battery increases; in addition, when the mass ratio of filling material to raw material is excessively large, a large amount of filling material may be left on the surface of the particles, at which time the particles are more likely to agglomerate, which not only requires the addition of the depolymerization process, but also reduces the specific capacity and compaction density of the obtained carbon material obtained.

By adjusting the parameters such as the type, the softening point, the coking value, and the addition amount of the filling material within the above range, the filling material, after being heated and melted, does not have a high viscosity, maintains good fluidity, and at the same time is not easy to bond the raw material particles, which is capable of reducing the agglomeration of the raw material particles in the subsequent preparation process, and thereby also reduces the problems such as an increase in the defects on the surface of the carbon material particles and an increase in the number of surface-active sites and the like due to the need for depolymerization processes.

In some embodiments, in step 2, after mixing the raw material and filling material in a predetermined ratio homogeneously, they are heated to the first temperature T₁ by a staged heating process, optionally including a first heating process, a second heating process and a third heating process.

In some embodiments, the first heating process is heating to a temperature of from 200°C to 250°C and holding at this temperature for 1 to 2 hours.

In some embodiments, the second heating process is carried out by heating to a temperature of from 450°C to 550°C and holding at this temperature for 1 to 2 hours.

In some embodiments, the third heating process is carried out by heating to the first temperature T₁ and holding at the first temperature T₁ for a first time t₁.

In the staged heating process, the temperature is first raised to 200°C-250 ° C, due to the heating temperature is higher than the softening point of the filling material, therefore, at which temperature the filling material is melt and softened by heating, insulation for 1h - 2h can make it flow to fill the pore structure of the raw material; after the temperature rise to 450°C-550°C, at which time the melt and softened filling material undergoes a carbonization reaction, gradually forming a semi-coke state, turning into a viscous liquid or solid, thus avoiding the filling material from entering all the pore structure of the raw material; finally, the temperature is raised to the first temperature, at which temperature the filling material undergoes a carbonization reaction, thus enabling the pore structure occupied by the filling material to be filled effectively.

In some embodiments, in Step 2, the temperature is raised to the first temperature T₁ at a rate of 1°C/min-10°C/min. For example, the heating rate may be 1°C/min, 2°C/min, 3°C/min, 4°C/min, 5°C/min, 6°C/min, 7°C/min, 8°C/min, 9°C/min, 10°C/min or in the range consisting of any two of the above values.

The inventors have found in the course of their research that the heating rate in the above range facilitates the regulation of the number of the pores and/or the size of the pores in the external region and the internal region of the carbon material in a suitable range.

In some embodiments, the first heating process may have a heating rate of 1°C/min-10°C/min.

In some embodiments, the second heating process may have a heating rate of 1°C/min-10°C/min.

In some embodiments, the third heating process may have a heating rate of 1°C/min-10°C/min.

In some embodiments, in Step 2, the first temperature T₁ is 700°C-1200°C. For example the first temperature T₁ may be 700°C, 750°C, 800°C, 850°C, 900°C, 950°C, 1000°C, 1050°C, 1100°C, 1200°C, or in a range composed of any of the above values. Optionally, the first temperature T₁ is 720°C-1100°C.

During the research, the inventors have found that when the first temperature is within the above range, the size and/or number of pores in the external region and internal region of carbon materials can be advantageously adjusted to be within an appropriate range. In addition the following situations can be effectively avoided: if the first temperature is excessively low, the filling material may not be fully converted into carbon, and during the subsequent heating treatment in Step 3, it will continue to decompose into small molecule substances, resulting in the actual residual carbon in the filling area having a large number of pore structures, which fails to effectively modify the internal defects of the particles, and also cannot effectively prevent the electrolytic solution from infiltrating into the pore structure inside the obtained carbon material particles, which further affects the initial columbic efficiency, cycling performance and storage performance of the secondary battery; if the first temperature is excessively high, the energy consumption during the preparation process of carbon materials will increase.

In some embodiments, the first time t₁ is 1h-5h. For example, the first time t₁ may be 1h, 1.5h, 2h, 2.5h, 3h, 3.5h, 4h, 4.5h, 5h, or in a range consisting of any two of the above values. Optionally, the first time t₁ is 2h-4h.

The inventors have found in the course of their research that the first time within the above range is favorable to regulating the pore size and/or the number of pores in the external region and the internal region of the carbon material in a suitable range. In addition it can effectively avoid the following situation: when the first time is excessively short, the filling material may not be effectively fill the carbon material , thereby resulting in the actual residual carbon in the filling area having a high number of pore structures, failing to play the role of effectively modifying the internal defects of the particles, and also failing to effectively prevent the electrolytic solution from infiltrating into the pore structures in the interior of the obtained carbon material particles, which will in turn affect the initial coulombic efficiency, cycling performance and storage performance of the secondary battery; if the first time is excessively long, the energy consumption during the preparation process of carbon materials will increase.

In some embodiments, in Step 2, the heat treatment may be carried out in a medium frequency furnace, a roller kiln, a rotary kiln, or a pusher kiln.

In some embodiments, in Step 2, atmosphere for the heating treatment may be a protective gas atmosphere. The protective gas may include one or more of nitrogen, argon and helium.

In Step 2, by adjusting one or more of the heating rate, the first temperature, the first time, the heating process, etc., within the range described above, it is favorable to preparing the carbon material having the desired structure. For example, it is favorable for carbon materials to satisfy S₂ > S₁, optionally 1.5 ≤ S₂/S₁ ≤ 450 and 2 ≤ S₂/S₁ ≤ 400.

In some embodiments, the second temperature T₂ is 1800°C-2600°C. For example, the second temperature may be 1800°C, 1900°C, 2000°C, 2100°C, 2200°C, 2300°C, 2400°C, 2500°C, 2600°C, or in a range consisting of any two of the above values. Optionally, the second temperature T₂ is 1860°C-2560°C, 1860°C-2520°C, 1860°C-2480°C, 1860°C-2450°C, 1860°C-2410°C, 1860°C-2370°C, 1860°C-2330°C, 1900°C-2560°C, 1900°C-2520°C, 1900°C-2480°C, 1900°C-2450°C, 1900°C-2410°C, 1900°C-2370°C, 1900°C-2330°C, 1970°C-2560°C, 1970°C-2520°C, 1970°C-2480°C, 1970°C-2450°C, 1970°C-2410°C, 1970°C-2370°C, 1970°C-2330°C, 2030°C-2560°C, 2030°C-2520°C, 2030°C-2480°C, 2030°C-2450°C, 2030°C-2410°C, 2030°C-2370°C, or2030°C-2330°C.

The inventor found in the course of the research that when the second temperature is within the above range, it is favorable to regulating the degree of disorder of the carbon material, and it is also favorable for the carbon material to have a stable structure and avoid particle fragmentation as much as possible. In addition the following situations can be effectively avoided: when the second temperature is excessively low, the content of disordered carbon in the obtained carbon material is high, which results in a high defect content of the carbon material, especially a high surface defect content, affecting the initial coulombic efficiency and storage performance of the carbon material; when the second temperature is excessively high, the content of disordered carbon in the carbon material obtained is too low, and the crystallinity and graphitization of the carbon material are high, at which time it is not conducive to the active ions' intercalation and deintercalation, while the volume change of the carbon material during the charging and discharging process is also large, thereby also increasing the risk of fragmentation of the carbon material particles, and thus affecting the cycling performance and storage performance of the secondary battery.

In some embodiments, the second time t₂ is 1.5h-6h. For example, the second time t₁ may be 2h, 2.5h, 3h, 3.5h, 4h, 4.5h, 5h, 5.5h, 6h, or in a range consisting of any two of the above values. Optionally, the second time t₂ is 2h-5h.

The inventor found in the course of the research that when the second time is within the above range, it is favorable to regulating the disorder of the carbon material, and it is also favorable for the carbon material to have a stable structure and to avoid particle fragmentation as much as possible. In addition it can effectively avoid the following situations: when the second time is excessively short, the content of disordered carbon in the carbon material obtained is high, which leads to a high defect content of the carbon material, especially a high surface defect content, affecting the specific capacity and the initial Coulombic efficiency of the carbon material; when the second time is excessively long, the content of disordered carbon in the obtained carbon material is too small, and the crystallinity and graphitization degree of the carbon material are very high, at which time it is not conducive to the rapid detachment and embedding of the active ions, and the second time is too long, which is conducive to the rapid intercalation and deintercalation of the active ions, and at the same time, the volume change of the carbon material during the charging and discharging process is also large, whereby the risk of fragmentation of the carbon material particles is also increased, thus affecting the cycling performance and the storage performance of the secondary battery.

In some embodiments, in Step 3, the heat treatment may be carried out in an intermediate frequency furnace, a chamber graphitization furnace, an Acheson graphitization furnace, a continuous graphitization furnace, or an inner string graphitization furnace.

In some embodiments, in Step 3, atmosphere for the heating treatment in the medium frequency furnace, continuous graphitization furnace may be a protective gas atmosphere. The protective gas may include one or more of nitrogen, argon, and helium.

By adjusting one or more of the second temperature, the second time within the above range, it is favorable to adjusting the content of disordered carbon in the carbon material within a suitable range, it is favorable to making the I_{D}/I_{G} of the carbon material in a suitable range, and it is also favorable to making the carbon material satisfy S₂/S₁ in a suitable range.

The method for preparing the carbon material of the present application is simple and safe, does not require preset pressure or vacuum treatment, and can be used without an additional depolymerization process in the heat treatment process. The carbon material prepared in the present application has small volume expansion, high structural stability and low surface activity, which can be further have high specific capacity, high initial coulombic efficiency and small volume change, and can also make the secondary battery have high initial coulombic efficiency, high energy density, good cycling performance and storage performance.

The preparation method of the present application has low cost, high practicality, and is suitable for large to scale production.

### Secondary Battery

In the third aspect, the present embodiment provides a secondary battery.

There are no specific restrictions on the types of secondary batteries in the present application, for example, the secondary battery may be a lithium-ion batteries. Normally, the secondary battery comprises a positive electrode plate, a negative electrode plate, and electrolytes. During the charging and discharging process of the secondary battery, active ions repeatedly intercalate into and deintercalate back and forth between the positive electrode plate and the negative electrode plate, and the electrolyte plays the role of conducting active ions between the positive electrode plate and the negative electrode plate. The present application has no particular limitation on the type of the electrolyte, which may be selected according to actual needs. For example, the electrolyte may be selected from at least one of a solid electrolyte and a liquid electrolyte (i.e., an electrolytic solution). In the secondary battery employing an electrolytic solution, and in some secondary batteries employing a solid electrolyte, a separator may be included, which is provided between the positive electrode plate and the negative electrode plate to serve as an isolation.

### [Negative electrode plate]

In some embodiments, the negative electrode plate includes a negative electrode current collector and a negative film layer arranged on at least one surface of the negative electrode current collector. For example, the negative electrode current collector has two surfaces opposite in the thickness direction thereof, and the negative electrode film layer is arranged on either or both of the two opposite surfaces of the negative electrode current collector.

In some embodiments, the negative electrode film layer comprises the carbon material according to the first aspect of the present application or the carbon material prepared by the method described in the second aspect of the present application. Accordingly, the secondary battery can have high initial columbic efficiency, high energy density, good cycling performance and storage performance.

In some embodiments, the negative electrode film layer may further include other negative electrode active materials in addition to the aforementioned carbon materials. In some embodiments, the other negative electrode active materials include but are not limited to one or more of conventional natural graphite, artificial graphite, soft carbon, hard carbon, silicon-based materials, tin-based materials, and lithium titanate. The silicon-based material may include one or more of elemental silicon, a silicon oxide, a silicon carbon composite, a silicon nitrogen composite, and a silicon alloy material. The tin-based material may include one or more of elemental tin, a tin oxide, and a tin alloy material.

In some embodiments, the negative electrode film layer may optionally include a negative electrode conductive agent. In the present application, the types of negative electrode conductive agents are not specially limited. For example, the negative electrode conductive agent may include one or more of superconducting carbon, conductive graphite, acetylene black, carbon black, Ketjen black, carbon dots, carbon nanotubes, graphene, and carbon nanofibers.

In some embodiments, the negative electrode film layer may optionally include a negative electrode binder. In the present application, the type of negative electrode binders is not specially limited. For example, the negative electrode binder may include one or more of styrene butadiene rubber (SBR), water-soluble unsaturated resin SR-1B, water-based acrylic resin (such as polyacrylic acid PAA, polymethyl acrylic acid PMAA, and polyacrylic acid sodium PAAS), polyacrylamide (PAM), polyvinyl alcohol (PVA), sodium alginate (SA), and carboxymethyl chitosan (CMCS).

In some embodiments, the negative electrode film layer may optionally include other additives. For example, other additives may include a thickener, such as sodium carboxymethyl cellulose (CMC), and a PTC thermistor material.

In some embodiments, the negative electrode current collector may be a metal foil or composite current collector. As an example of the metal foil, a copper foil may be used. The composite current collector may include a polymeric material base layer and a metal material layer formed on at least one surface of the polymeric material base layer. As an example, the metal material may comprise one or more of copper, copper alloy, nickel, nickel alloy, titanium, titanium alloy, silver, and silver alloy, and the polymeric material base layer may include one or more of polypropylene (PP), polyethylene terephthalate (PET), polybutylene terephthalate (PBT), polystyrene (PS), and polyethylene (PE).

The negative electrode film layer is usually formed by applying the negative electrode slurry on the negative electrode current collector, drying, and cold pressing. The negative electrode slurry is usually formed by dispersing the negative electrode active material, optional conductive agent, optional binder, and other optional additives in a solvent and stirring evenly. The solvent may be N-methylpyrrolidone (NMP) or deionized water, but is not limited thereto.

The negative electrode plate does not exclude other additional functional layers other than the negative electrode film layer. For example, in some embodiments, the negative electrode plate described in the present application further includes a conductive primer layer sandwiched between the negative electrode current collector and the negative electrode film layer, arranged on the surface of the negative electrode current collector (for example, composed of a conductive agent and a binder). In some embodiments, the negative electrode plate described in the present application also includes a protective layer covering on the surface of the negative electrode film layer.

### [Positive electrode plate]

In some embodiments, the positive electrode plate includes a positive electrode current collector and a positive electrode film layer arranged on at least one surface of the positive electrode current collector. For example, the positive electrode current collector has two surfaces opposite in the thickness direction thereof, and the positive electrode film layer is arranged on either or both of the two opposite surfaces of the positive electrode current collector.

The positive electrode current collector may be a metal foil or composite current collector. For example, the metal foil may be an aluminum foil. The composite current collector may include a polymeric material base layer and a metal material layer formed on at least one surface of the polymeric material base layer. For example, the metal material may include one or more of aluminum, aluminum alloys, nickel, nickel alloys, titanium, titanium alloys, silver, and silver alloys. For example, the polymeric material base layer may include one or more of polypropylene (PP), polyethylene terephthalate (PET), polybutylene terephthalate (PBT), polystyrene (PS), and polyethylene (PE).

The positive electrode film layer typically includes a positive electrode active material, optional binder, and optional conductive agent. The positive electrode film layer is usually formed by applying the positive electrode slurry on the positive electrode current collector, drying, and cold pressing. The positive electrode slurry is usually formed by dispersing the positive electrode active material, optional conductive agent, optional binder, and any other components in a solvent and stirring evenly. The solvent may be N-methylpyrrolidone (NMP), but is not limited thereto. As an example, the positive electrode binder may include one or more selected from polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin. As an example, the positive electrode conductive agent may include one or more selected from superconducting carbon, conductive graphite, acetylene black, carbon black, Ketjen black, carbon dots, carbon nanotubes, graphene, and carbon nanofibers.

The positive electrode active material may be a positive electrode active material commonly known in the art for secondary batteries.

When the secondary battery of the present application is a lithium-ion battery, the positive electrode active material may include at least one of lithium transition metal oxide, lithium-containing phosphate, or their respective modified compounds. Examples of the lithium transition metal oxide may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt aluminium oxide, or modified compounds thereof. Examples of the lithium-containing phosphate may include, but are not limited to, at least one of lithium iron phosphate, a composite of lithium iron phosphate and carbon, lithium manganese phosphate, a composite of lithium manganese phosphate and carbon, lithium ferromanganese phosphate, a composite of lithium ferromanganese phosphate and carbon, or their respective modified compounds.

In some embodiments, in order to further increase the energy density of the secondary battery, the positive electrode active material for the lithium-ion battery may include one or more of the lithium transition metal oxides with the formula LiₐNi_{b}Co_{c}MₐOₑAᵣ and modified compounds thereof, in which 0.8 ≤ a ≤ 1.2, 0.5 ≤ b < 1, 0 < c < 1, 0 < d < 1, 1 ≤ e ≤ 2, 0 ≤ f ≤ 1, M is selected from one or more of Mn, Al, Zr, Zn, Cu, Cr, Mg, Fe, V, Ti, and B, and A is selected from one or more of N, F, S, and Cl.

In some embodiments, as an example, the positive electrode active material for a lithium-ion battery may include one or more of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄ and LiMnPO₄.

In the present application, the modified compounds of the foregoing positive electrode active materials may undergo doping modification and/or surface coating modification of the positive electrode active materials.

### [Electrolyte]

In some embodiments, the electrolyte is an electrolytic solution comprising an electrolyte salt and an organic solvent.

The type of the electrolyte salt is not specifically limited and may be selected according to actual needs.

When the secondary battery of the present application is a lithium-ion battery, as an example, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluorooxalate (LiDFOB), lithium bisoxalate (LiBOB), lithium difluorophosphate (LiPO₂F₂), lithium difluorobisoxalate phosphate (LiDFOP), and lithium tetrafluorooxalate phosphate (LiTFOP).

The type of the solvent is not specifically limited and may be selected according to actual needs. As an example, the organic solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butyl carbonate (BC), fluoroethylene carbonate (FEC),methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and ethyl sulfonyl ethane (ESE).

In some embodiments, the electrolytic solution may further optionally include additives. For example, the additives may include a negative electrode film-forming additive, a positive electrode film-forming additive, as well as additives that can improve certain performance of secondary batteries, such as an additive that improves overcharge performance of batteries, an additive that improves high-temperature performance of batteries, and an additive that improves low-temperature power performance of batteries.

### [Separator]

There is no particular limitation on the type of the separator in the present application. The separator may be any known porous separator with good chemical and mechanical stability.

In some embodiments, the material of the separator may include one or more of glass fibers, a non-woven fabric, polyethylene, polypropylene, and polyvinylidene fluoride. The separator may be a single-layer thin film or a multi-layer composite thin film without special limitations. When the separator is a multi-layer composite thin film, materials of various layers may be the same or different.

In some embodiments, the positive electrode plate, the negative electrode plate, and the separator may be manufactured into an electrode assembly through a winding process or a stacking process.

In some embodiments, the secondary battery may include an outer package. The outer package may be used to encapsulate the electrode assembly and electrolyte.

In some embodiments, the outer package of the secondary battery may be a hard case, such as a hard plastic case, an aluminum case, a steel case, and the like. The outer package of the secondary battery may also be a soft package, such as a pouch-type soft package. A material of the soft bag can be plastic, such as one or more of polypropylene (PP), polybutylene terephthalate (PBT), and polybutylene succinate (PBS).

The shape of the secondary battery is not particularly limited in the present application, and it may be cylindrical, square, rectangular or any other shape. FIG. 3 is a schematic diagram of a secondary battery 5 of a rectangular structure as an example.

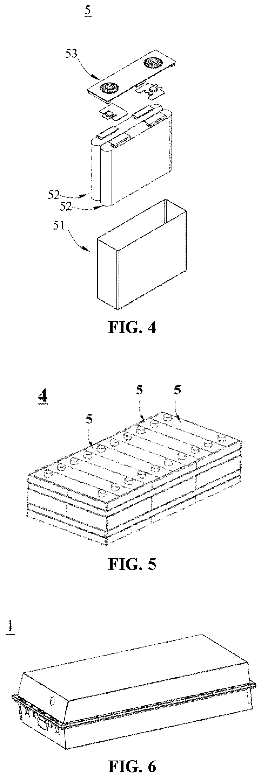

In some embodiments, as shown in FIG. 4, the outer package may include a casing 51 and a cover plate 53, wherein the casing 51 may include a bottom plate and side plates connected to the bottom plate, and the bottom plate and the side plates are enclosed to form an accommodating cavity. The casing 51 has an opening communicating with the accommodating cavity, and the cover plate 53 is used to cover the opening to close the accommodating cavity. A positive electrode plate, a separator, and a negative electrode plate may be made into an electrode assembly 52 by a winding process or a stacking process. The electrode assembly 52 is packaged in the accommodating cavity, and the electrolytic solution is infiltrated in the electrode assembly 52. The number of electrode assemblies 52 contained in the secondary battery 5 may be one or several, and may be adjusted according to requirements.

The method for preparing the secondary battery in the present application is well-known. In some embodiments, the positive electrode plate, the separator, the negative electrode plate, and the electrolytic solution may be assembled to form the secondary battery. As an example, the positive electrode plate, the separator, and the negative electrode plate may form an electrode assembly through a winding or stacking process, the electrode assembly is placed in an outer package and dried, then the electrolytic solution is injected, followed by vacuum packaging, standing, formation, shaping, and other processes, thereby obtaining the secondary battery.

In some embodiments of the present application, the secondary batteries according to the present application can be assembled into a battery module, and the number of secondary batteries contained in the battery module can be more than one, and the specific number can be adjusted according to application and capacity of the battery module.

FIG. 5 is a schematic diagram of the battery module 4 as an example. As shown in FIG. 5, in the battery module 4, a plurality of secondary batteries 5 may be arranged in sequence along the longitudinal direction of the battery module 4. Certainly, they can also be arranged in any other manner. Furthermore, a plurality of secondary batteries 5 can be fixed with fasteners.

Optionally, the battery module 4 may further include a housing having an accommodating space in which a plurality of secondary batteries 5 are accommodated.

In some embodiments, the above-mentioned battery modules can also be assembled into a battery pack, and the number of battery modules included in the battery pack can be adjusted according to the application and capacity of the battery pack.

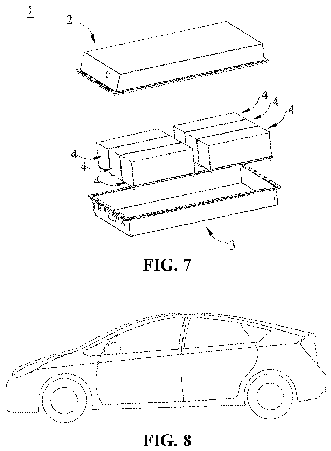

FIGS. 6 and 7 are schematic diagrams of the battery pack 1 as an example. As shown in FIGS. 6 and 7, the battery pack 1 may include a battery case and a plurality of battery modules 4 provided in the battery case. The battery box includes an upper case body 2 and a lower case body 3, and the upper case body 2 is used to cover the lower case body 3 to form a closed space for accommodating the battery modules 4. A plurality of battery modules 4 may be arranged in the battery case in any manner.

### Electrical Device

The present application further provides an electrical device comprising at least one of the secondary battery, battery module, or battery pack of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select to use a secondary battery, a battery module or a battery pack according to its usage requirements.

FIG. 8 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electrical device is generally required to be light and thin, and a secondary battery can be used as a power source.

### Examples

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on weight, and all reagents used in the examples are commercially available or synthesized according to conventional methods and can be directly used without further treatment, and all instruments used in the examples are commercially available.

### Example 1

### (1) Preparation of Carbon Material

Step 1: 100 mesh flake graphite was mechanical crushed, graded, spheroidized, and purified, to obtain natural spherical graphite having a volume distribution particle size Dv50 of 11µm and a BET specific surface area of 7m²/g.

Step 2: The obtained natural spherical graphite and petroleum asphalt (having a softening point of 148°C, a volume distribution particle size Dv50 of 4.5 µm, and a coking value of 40%) were mixed at a mass ratio of 100:20 in a VC mixer for 30 minutes, and then the mixed materials were placed in a drum furnace, where the temperature was raised at a rate of 5°C/min to 220°C and was kept for 1 hours (the first heating process), then the temperature was raised at a rate of 5°C/min to 500°C and was kept for 2 hours (the second heating process), and at last the temperature was raised at a rate of 5°C/min to 1000°C and was kept for 2 hours (the third heating process). Then, the temperature was cooled to room temperature to obtain the intermediate.

Step 3: The obtained intermediate was placed in the Acheson graphitization furnace, and the temperature was raised to 2400°C and kept for 2 hours. After demagnetizing and screening, the carbon material was obtained.

With reference to GB/T 19587-2017, the specific surface area of the carbon material was 1.07m²/g by using the nitrogen adsorption specific surface area analytical test method and calculated by the BET (Brunauer Emmett Teller) method. The testing instrument can be the Tri-Star 3020 specific surface area pore size analytical tester from Micromeritics Company of the United States. Analyzing tester.

With reference to GB/T 30835-2014, the powder resistivity of carbon material was determined by four-probe method through a powder resistivity tester, and the powder resistivity of carbon material was 0.0110Ω.cm under the pressure of 8Mpa. The testing instrument can be ST2722 from Suzhou Lattice Electronics Co., Ltd.

With reference to JIS K 0131-1996 and JB/T 4220-2011, the average interplanar spacing d₀₀₂ of (002) crystal planes in the crystalline structure of the carbon material was obtained and then the graphitization degree of the carbon material was 97.3% according to the formula g = (0.344-d₀₀₂)/(0.344-0.3354)×100%. The testing instrument can be a Bruker D8 Discover X-ray diffractometer.

### (2) Preparation of Button Battery (Half-Cell)

The above prepared carbon material was mixed with the styrene butadiene rubber (SBR) as a binder, sodium carboxymethyl cellulose (CMC) as a thickener, and carbon black as a conductive agent in an appropriate amount of solvent deionized water in a mass ratio of 96.2:1.8:1.2:0.8, to form a uniform negative electrode slurry; the negative electrode slurry was applied evenly on the surface of the negative electrode current collector copper foil, and dried in an oven for later use. Ethylene carbonate (EC), methyl ethyl carbonate (EMC), and diethyl carbonate (DEC) were mixed in a volume ratio of 1:1:1 to obtain an organic solvent. Then, LiPF₆ was dissolved in the aforementioned organic solvent to prepare an electrolytic solution with a concentration of 1 mol/L. Afterwards, a CR2430 button battery was assembled in an argon protected glove box by using a metal lithium sheet as the counter electrode and polyethylene (PE) film as the separator.

### (3) Preparation of Secondary Battery (Full-Cell)

The above prepared carbon material, carbon black (Super P) as a conductive agent, styrene butadiene rubber as a binder, and sodium carboxymethyl cellulose as a thickener were mixed in an appropriate amount of solvent deionized water in a weight ratio of 96:1:1:2 to form a negative electrode slurry. The negative electrode slurry was applied onto the two surfaces of the negative electrode current collector copper foil, and after drying and cold pressing, the negative electrode plate was obtained.

LiFePO₄, conductive carbon black and polyvinylidene fluoride were mixed in a weight ratio of 96:2.5:1.5, then an appropriate amount of solvent NMP was added under homogeneous stirring, to obtain the positive electrode slurry. The positive electrode slurry was applied onto the two surfaces of the positive electrode current collector aluminum foil, and after drying and cold pressing, the positive electrode plate was obtained.

The polypropylene film having a thickness of 12 µm was used as a separator, and was placed with the positive and negative electrode plates prepared above in sequence, so that the separator was between the positive and negative electrode plates to play a role of isolation; then they were wound to obtain the electrode assembly; the electrode assembly was placed in the outer packaging and dried, after which the electrolytic solution identical to that for the preparation of the button battery was injected. After vacuum encapsulation, standing, chemical formation, shaping, and other processes, the secondary battery was obtained.

### Comparative Example 1

The methods for preparing half-cells and full-cells were similar to those of Example 1, except that the method for preparing the carbon materials was different.

Mechanical crushing, grading, spheroidization, and purification of 100 mesh flake graphite were carried out to obtain natural spherical graphite with a volume distribution particle size Dv50 of 11µm and a BET specific surface area of 7m²/g. Then the obtained natural spherical graphite was used as a carbon material to prepare half-cells and full-cells.

### Comparative Example 2

The methods for preparing half-cells and full-cells were similar to those of Example 1, except that the method for preparing the carbon materials was different.

Mechanical crushing, grading, spheroidization, and purification of 100 mesh flake graphite were carried out to obtain natural spherical graphite with a volume distribution particle size Dv50 of 11µm and a BET specific surface area of 7m²/g. The obtained natural spherical graphite and petroleum asphalt (having a softening point of 148°C, a volume distribution particle size Dv50 of 4.5µm, and a coking value of 40%) were mixed at a mass ratio of 100:20 in a VC mixer for 30 minutes, and then the mixed materials were graphitized at 3200°C for 10 hours. After cooled to room temperature, the carbon material was obtained.

### Comparative Example 3

The methods for preparing half-cells and full-cells were similar to those of Example 1, except that the method for preparing the carbon materials was different.

Mechanical crushing, grading, spheroidization, and purification of 100 mesh flake graphite were carried out to obtain natural spherical graphite with a volume distribution particle size Dv50 of 11µm and a BET specific surface area of 7m²/g. The obtained natural spherical graphite and petroleum asphalt (having a softening point of 148°C, a volume distribution particle size Dv50 of 4.5µm, and a coking value of 40%) were mixed at a mass ratio of 100:20 in a VC mixer for 30 minutes, and then the mixed materials were graphitized at 1300°C for 2 hours. After cooled to room temperature, the carbon material was obtained.

### Comparative Example 4

The methods for preparing half-cells and full-cells were similar to those of Example 1, except that the method for preparing the carbon materials was different.

The graphite crude ore was processed into small particles by mechanical treatment. The resulting particles were subjected to a strong alkali solution treatment and a strong acid solution treatment at high temperatures to remove impurities. After washing and drying at high temperatures, sieving was carried out to mine plate-like natural graphite. Primary and secondary grinding, i.e. mechanical processing, was carried out in order to turn the plate-like natural graphite into spherical shapes. Subsequently, after acid treatment, washing and drying, purification was carried out to obtain spherical natural graphite of high purity. During mechanical pulverization and grinding, the surface of the spherical natural graphite obtained was damaged and chemically reactive groups were formed after washing with strong alkalis/acids. During spheronization, defects occurred in the natural graphite due to mechanical processing. Carbon cladding was carried out by dry cladding of asphalt (softening point of 148°C, volume distribution particle size Dv50 of 4.5µm, and coking value of 40%) in solid phase onto the surface of damaged high-purity solid-phase natural graphite and the carbonizing it at 1200°C for 24 h in an inert gas atmosphere, followed by crushing, sieving, and removal of iron, to obtain the carbon material.

### Comparative Example 5

The methods for preparing half-cells and full-cells were similar to those of Example 1, except that the method for preparing the carbon materials was different.

Mechanical crushing, grading, spheroidization, and purification of 100 mesh flake graphite were carried out to obtain natural spherical graphite with a volume distribution particle size Dv50 of 11 µm and a BET specific surface area of 7m²/g. The obtained natural spherical graphite and powdered medium-temperature asphalt (quinoline insoluble substance content of 1%, softening point of 80°C) containing toluene (accounting for 0.5% of the mass of asphalt) were mixed at a mass ratio of 1:1, and then added into the reactor. The reactor was sealed and heated up to 200°C at 3°C/min, at which temperature was kept for 4h, and the pressure was kept at 0.1MPa, and then the samples were taken out, and then loaded into the furnace for graphitization at 3000°C after the samples were cooled down. The graphitized sample was crushed and graded to obtain carbon material.

### Comparative Example 6

The methods for preparing half-cells and full-cells were similar to those of Example 1, except that the method for preparing the carbon materials was different.

Mechanical crushing, grading, spheroidization, and purification of 100 mesh flake graphite were carried out to obtain natural spherical graphite with a volume distribution particle size Dv50 of 11µm and a BET specific surface area of 7m²/g.

The obtained natural spherical graphite and petroleum asphalt (having a softening point of 148°C, a volume distribution particle size Dv50 of 4.5µm, and a coking value of 40%) were mixed in a VC mixer for 30 minutes. Then the mixed materials were put into the reactor, which was heated stepwise at a heating rate of 2°C/min under evenly stirring. After the temperature was raised to 190°C, the reactor was vacuumed to a pressure of to -0.1MPa, and held for 2 hours; afterwards, the reactor was heated up to 650°C and held for 2 hours, then cooled to a temperature of about 160°C, after which petroleum asphalt was slowly added into the reactor in an amount that was 1:1 in mass relative to the amount of the petroleum asphalt added previously. Then, the reactor was heated to 190°C again, vacuumed to the pressure of -0.1MPa, and held for 2 hours; afterwards, it was heated to 650°C again and held for 2 hours, and then cooled via condensation. At last, the materials treated by the above process were heat-treated at 1300°C for 2 hours, and then were crushed and sieved to obtain a carbon material without internal pores.

### Examples 2 to 7 and Comparative Example 7

The half-cells and full-cells were prepared according to the methods similar to those of Example 1, except that the preparation process parameters of the carbon material were adjusted, as detailed in Table 1.

**Table 1**

| No. | Step 3 | |
|---|---|---|
| | Holding temperature (°C) | Holding time (h) |
| Example 1 | 2400 | 2 |
| Example 2 | 2500 | 2 |
| Example 3 | 2300 | 2 |
| Example 4 | 2200 | 2 |
| Example 5 | 2100 | 2 |
| Example 6 | 1900 | 2 |
| Example 7 | 1800 | 2 |
| Comparative Example 7 | 3200 | 2 |

### Examples 8-13

The half-cells and full-cells were prepared according to the methods similar to those of Example 1, except that the parameters of the filling material in the preparation process of the carbon material were adjusted, as detailed in Table 2.

**Table 2**

| No. | Filling material | | | |
|---|---|---|---|---|
| | Softening point (°C) | Dv50 (µm) | Coking value (%) | Mass ratio of natural spherical graphite to petroleum asphalt |
| Example 8 | 80 | 4.5 | 20 | 100:20 |
| Example 9 | 120 | 4.5 | 30 | 100:20 |
| Example 10 | 135 | 4.5 | 35 | 100:20 |
| Example 11 | 160 | 4.5 | 42 | 100:20 |
| Example 12 | 180 | 4.5 | 48 | 100:20 |
| Example 13 | 200 | 4.5 | 55 | 100:20 |

### Examples 14-23

The half-cells and full-cells were prepared according to the methods similar to those of Example 3, except that the parameters in Step 2 of the preparation process of the carbon material were adjusted, as detailed in Table 3.

**Table 3**

| No. | First heating process | | | Second heating process | | | Third heating process | | |
|---|---|---|---|---|---|---|---|---|---|
| | Heating rate (°C/min) | Holding temperature (°C) | Holding time (h) | Heating rate (°C/min) | Holding temperature (°C) | Holding time (h) | Heating rate (°C/min) | Holding temperature (°C) | Holding time (h) |
| Example 14 | 1 | 200 | 1 | 5 | 500 | 2 | 5 | 1000 | 2 |
| Example 15 | 3 | 200 | 1.5 | 5 | 500 | 2 | 5 | 1000 | 2 |
| Example 16 | 4 | 220 | 2 | 5 | 500 | 2 | 5 | 1000 | 2 |
| Example 17 | 10 | 250 | 2 | 5 | 500 | 2 | 5 | 1000 | 2 |
| Example 18 | 5 | 220 | 2 | 5 | 500 | 2 | 5 | 600 | 4 |
| Example 19 | 5 | 220 | 2 | 5 | 500 | 2 | 5 | 700 | 5 |
| Example 20 | 5 | 220 | 2 | 5 | 500 | 2 | 5 | 850 | 4 |
| Example 21 | 5 | 220 | 2 | 5 | 500 | 2 | 5 | 950 | 3.5 |
| Example 22 | 5 | 220 | 2 | 5 | 500 | 2 | 5 | 1100 | 2 |
| Example 23 | 5 | 220 | 2 | 5 | 500 | 2 | 5 | 1300 | 2 |

### Examples 24-28

The half-cells and full-cells were prepared according to the methods similar to those of Example 1, except that the parameters in Step 1 of the preparation process of the carbon material were adjusted, as detailed in Table 4.

**Table 4**

| No. | Natural spherical graphite | | Mass ratio of natural spherical graphite to petroleum asphalt |
|---|---|---|---|
| | Dv50 (µm) | BET specific surface area (m²/g) | |
| Example 24 | 22.6 | 5.0 | 100:30 |
| Example 25 | 26.5 | 4.5 | 100:25 |
| Example 26 | 20.5 | 6.0 | 100:15 |
| Example 27 | 26.5 | 4.5 | 100:30 |
| Example 28 | 8.5 | 8.6 | 100:25 |

### Performance Tests

### (1) Test of the total pore area in the external region and internal region of carbon materials

The binder for making sample was evenly mixed with carbon material powder and then the mixture was applied on the copper foil, drying at 60°C for 30 minutes; the samples were cut into pieces of 6mm × 6mm and then were pasted on the sample stage of CP-type Argon Ion Cross-Section Polisher; the samples were cut using a plasma beam to obtain the cross-section of the carbon material, the cross-section of the carbon material passed through the center of the carbon material particles. The test instrument may be IB- 09010 CP Argon Ion Cross-Section Polisher from JEOL, Japan.

The cross-section of the carbon materials were scanned using a scanning electron microscope. The test may be conducted according to JY/T010-1996. The test instrument may be Sigma 300 Scanning Electron Microscope from ZEISS, Germany.

The region formed by extending for a distance of 0.25L from the surface of the particles of the carbon material to the inside of the particles was noted as the external region, the region inside the external region was noted as the internal region, and L denoted the short-axis length of the particles of the carbon material. A total pore area S₁ of the external region of the carbon material and a total pore area S₂ of the internal region of the carbon material were calculated using an image processing software. The image processing software may be AVIZO.

### (2) Raman spectrum test of carbon materials

I_{D}/I_{G} of the carbon material was tested by using a Raman spectrometer, under the following test conditions: excitation wavelength of 532nm, grating with 600 lines/mm, objective lens for 50 times, integration time of 10s, the cumulative number of times for 3 times, surface scanning, to get intensity I_{D} and I_{G} of 100 points; calculating I_{D}/I_{G} of the 100 points, removing the 30 largest and the 30 smallest I_{D}/I_{G} values, the average value of the remaining 40 points is I_{D}/I_{G} of the carbon material. Horiba LabRAM HR800 Raman spectrometer can be used as the test instrument.

### (3) Test of the initial columbic efficiency of carbon materials

The button battery as prepared above was firstly discharged to current of 0.005V at a constant current of 0.15mA at 25°C, standing for 5 minutes, and then was discharged to 0.005V at a constant current of 10 µA, the discharging capacity of the button battery at the 1^{st} cycle was recorded; afterwards, it was charged to 2.0V at a constant current of 0.3mA and the charging capacity of the button battery at the 1^{st} cycle was recorded.

The initial columbic efficiency of carbon materials (%) = charging capacity of button battery at the 1^{st} cycle/discharging capacity of button battery at the 1^{st} cycle× 100%.

### (4) Cycling performance of secondary batteries

At 45°C, the secondary battery as prepared above was charged at a constant current of 1C to the upper limit cutoff voltage (corresponding to 100% SOC), then charged at the constant voltage to a current of 0.05C, standing for 5 minutes, and was discharged at a constant current of 1C to the lower limit cutoff voltage (corresponding to 0% SOC). The discharging capacity at this time was recorded as the initial discharging capacity. The secondary battery was charged and discharged for cycles according to the above method, and the discharging capacity for each cycle was recorded. Capacity retention rate (%) of secondary battery after 1000 cycles at 45°C = discharging capacity at the 1000^{th} cycle/the initial discharging capacity × 100%.

### (5) Storage performance of secondary battery

At 25°C, the secondary battery as prepared above was charged at a constant current of 1C to the upper limit cutoff voltage (corresponding to 100% SOC), then charged at the constant voltage to a current of 0.05C, and after standing for 5min, the secondary battery was discharged at a constant current of 1C to the lower limit cutoff voltage (corresponding to 0% SOC). The discharging capacity at this time was recorded as the discharging capacity before storage.

At 25°C, the secondary battery as prepared above was charged at a constant current of 1C to the upper cutoff voltage (corresponding to 100% SOC), and then charged at the constant voltage to a current of 0.05 C. After that, the secondary battery was placed in a thermostat at 60°C for storage for 150 days. The capacity retention rate (%) of the secondary battery stored at 60°C for 150 days = discharging capacity after storage/discharging capacity before storage × 100%.

**Table 5**

| No. | S₁ (µm²) | S₂ (µm²) | S₂/S₁ | Property of carbon material | | Performance of battery | | |
|---|---|---|---|---|---|---|---|---|
| | | | | I_{D}/I_{G} | Graphitization degree | Initial coulombic efficiency | Capacity retention rate after cycling | Capacity retention rate after storage |
| Comparative Example 1 | 6.10 | 6.0 | 0.98 | 0.310 | 98.0% | 86.0% | 75.2% | 78.5% |
| Comparative Example 2 | 5.70 | 5.6 | 0.98 | 0.100 | 98.0% | 90.8% | 82.2% | 84.2% |
| Comparative Example 3 | 5.50 | 5.3 | 0.96 | 0.350 | 96.2% | 89.0% | 81.5% | 82.3% |
| Comparative Example 4 | 5.80 | 5.75 | 0.99 | 0.400 | 96.2% | 89.5% | 82.5% | 82.3% |
| Comparative Example 5 | 5.50 | 5.45 | 0.99 | 0.120 | 97.7% | 91.0% | 82.4% | 84.4% |
| Comparative Example 6 | 1.20 | 1.15 | 0.96 | 0.363 | 96.2% | 90.3% | 83.5% | 84.3% |
| Comparative Example 7 | 1.33 | 4.13 | 3.11 | 0.140 | 98.0% | 91.1% | 84.4% | 85.4% |
| Example 1 | 1.36 | 4.13 | 3.04 | 0.160 | 97.3% | 93.8% | 89.2% | 91.7% |
| Example 2 | 1.35 | 4.14 | 3.07 | 0.152 | 97.5% | 94.0% | 87.6% | 89.5% |
| Example 3 | 1.36 | 4.12 | 3.03 | 0.180 | 97.1% | 93.6% | 89.5% | 91.3% |
| Example 4 | 1.37 | 4.13 | 3.01 | 0.200 | 97.0% | 93.5% | 89.3% | 90.8% |
| Example 5 | 1.37 | 4.11 | 3.00 | 0.220 | 96.8% | 93.0% | 89.1% | 90.1% |
| Example 6 | 1.38 | 4.11 | 2.98 | 0.240 | 96.5% | 92.8% | 88.2% | 89.4% |
| Example 7 | 1.38 | 4.10 | 2.97 | 0.260 | 96.0% | 92.3% | 87.1% | 88.6% |
| Example 8 | 4.40 | 5.40 | 1.23 | 0.170 | 96.8% | 91.9% | 85.0% | 87.0% |
| Example 9 | 1.10 | 5.35 | 4.86 | 0.159 | 96.4% | 93.5% | 88.0% | 90.2% |
| Example 10 | 1.20 | 5.50 | 4.58 | 0.160 | 96.5% | 93.1% | 88.9% | 90.4% |
| Example 11 | 1.30 | 4.00 | 3.08 | 0.158 | 97.0% | 92.9% | 88.6% | 90.9% |
| Example 12 | 1.60 | 5.20 | 3.25 | 0.160 | 97.1% | 93.2% | 87.1% | 88.5% |
| Example 13 | 4.00 | 5.10 | 1.28 | 0.168 | 96.9% | 91.7% | 84.6% | 86.0% |
| Example 14 | 1.32 | 4.10 | 3.11 | 0.163 | 96.8% | 93.1% | 88.4% | 90.8% |
| Example 15 | 1.33 | 3.90 | 2.93 | 0.170 | 96.7% | 92.9% | 88.6% | 90.1% |
| Example 16 | 1.36 | 4.00 | 2.94 | 0.175 | 96.4% | 93.3% | 88.8% | 90.6% |
| Example 17 | 1.45 | 3.98 | 2.74 | 0.165 | 96.9% | 93.4% | 87.8% | 89.0% |
| Example 18 | 5.00 | 5.10 | 1.02 | 0.160 | 96.2% | 93.4% | 84.5% | 85.8% |
| Example 19 | 1.32 | 4.10 | 3.11 | 0.183 | 96.4% | 93.4% | 8.80% | 90.3% |
| Example 20 | 1.37 | 3.98 | 2.91 | 0.170 | 96.1% | 93.2% | 88.1% | 90.6% |
| Example 21 | 1.31 | 4.11 | 3.14 | 0.190 | 96.7% | 93.3% | 88.3% | 90.4% |
| Example 22 | 1.37 | 4.21 | 3.07 | 0.170 | 96.3% | 93.5% | 89.3% | 91.5% |
| Example 23 | 1.29 | 4.19 | 3.25 | 0.190 | 96.1% | 93.7% | 89.4% | 91.4% |
| Example 24 | 0.05 | 12.00 | 240.00 | 0.158 | 97.1% | 93.9% | 88.7% | 90.4% |
| Example 25 | 0.50 | 23.00 | 46.00 | 0.162 | 97.3% | 94.3% | 88.9% | 90.6% |
| Example 26 | 2.50 | 7.80 | 3.12 | 0.159 | 97.2% | 93.8% | 88.0% | 89.8% |
| Example 27 | 0.06 | 23.50 | 391.67 | 0.161 | 97.0% | 94.4% | 88.9% | 90.8% |
| Example 28 | 0.28 | 3.00 | 10.71 | 0.157 | 97.1% | 93.6% | 88.3% | 90.6% |

The specific surface area, volume distribution particle size, powder resistivity, powder compaction density, tap density, graphitization degree and other parameters of the carbon materials prepared in Examples 1-28 were all within the range described in the specification of the present application.

The Raman spectrum of the carbon materials prepared by the examples of the present application all satisfied 0.150 ≤ I_{D}/I_{G} ≤ 0.280, on the one hand, it was possible to effectively reduce the content of disordered carbon, lower the surface activity of the carbon materials, and reduce the consumption of active ions by the formation of SEI film on the surface of the particles, and, on the other hand, it was possible to make the carbon materials have a stable structure, and to avoid the fragmentation of the particles as much as possible. Therefore, the carbon material provided in the present application had a small volume expansion, a high structural stability and a low surface activity, and enabled the battery to have high specific capacity, high initial coulombic efficiency, high capacity retention rate after cycling and high capacity retention rate after storage.

None of the Raman spectrum of the carbon materials prepared in Comparative Examples 1-7 satisfied 0.150 ≤ I_{D}/I_{G} ≤ 0.280, and none of them enabled the battery to have high specific capacity, high initial coulombic efficiency, high capacity retention rate after cycling and high capacity retention rate after storage. The I_{D}/I_{G} of the carbon materials prepared in Comparative Example 1, Comparative Examples 3-4, and Comparative Example 6 were all greater than 0.280, in which case the carbon material had a high content of disordered carbon, the carbon material had a high number of surface active sites and a high content of surface defects, which resulted in a large irreversible depletion of the active ions, and thus did not enable the battery to have high specific capacity, high initial coulombic efficiency, high capacity retention rate after cycling, and high capacity retention rate after storage. The I_{D}/I_{G} of the carbon materials prepared in the Comparative Examples 2, 5, and 7 were all less than 0.150, at which time, the content of disordered carbon on the surface of the carbon material particles was less, and there were fewer active sites on the surface of the particles, but the ability of the activated ions to rapidly intercalate an deintercalate became poorer, and the volume change of the carbon material was larger in the process of charging and discharging of the battery, whereby the carbon material particles were more prone to fragmentation, and thus cannot make the battery combine high specific capacity, high initial coulombic efficiency, high capacity retention rate after cycling, and high capacity retention rate after storage.

As can be seen from the test results in Table 5, when the carbon material further satisfied S₂ > S₁, optionally 1.5 ≤ S₂/S₁ ≤ 450, more optionally 2 ≤ S₂/S₁ ≤ 400, the carbon material can further improve the specific capacity, the initial coulombic efficiency, the capacity retention rate after cycling and the capacity retention rate after storage of the battery. At this time, the carbon material particles were further characterized by a high number of pores and/or a large pore size in the internal region and a low number of pores and/or a small pore size in the external region. The pore structure of the internal region of the carbon material may reserve a required expansion space for the volume change of the carbon material particles, thereby reducing the risk of the carbon material particles breaking up to create a new interface, thereby reducing the occurrence of side reactions and reducing the irreversible capacity loss of the secondary battery. The number of pores in the external region of the carbon material was small and/or the size of the pores was small, the carbon material particles can be made to have a more stable structure, and the penetration of the electrolytic solution into the internal pore structure of the carbon material particles can be avoided as much as possible, whereby the occurrence of the side reaction can be reduced, and the consumption of active ions for the formation of the SEI film inside the particles can be reduced. This can further improve the specific capacity, the initial coulombic efficiency, the capacity retention rate after cycling, and the capacity retention rate after storage of the battery.

None of the carbon materials prepared in Comparative Examples 1-6 satisfied S₂ > S₁.

Comparative Example 1 used untreated natural spherical graphite as the carbon material, which had more pores both internally and externally.

The carbon materials prepared in Comparative Examples 2-4 form a carbon layer cladding the surface of the natural spherical graphite, but the carbon layer only existed on the surface of the natural spherical graphite, failing to realize the filling effect, and the carbon layer did not effectively prevent the electrolytic solution from penetrating into the pore structure inside the particles, which lead to limited improvement in the initial coulombic efficiency, the cycling performance and the storage performance of the battery.

When preparing the carbon material in Comparative Example 5, the softening point of the filling material used was low, and the small molecules in the filling material would evaporate during graphitization, which resulted in the actual residual carbon in the filling area not being able to effectively fill the pore structure of the natural spherical graphite, and the filling effect cannot be realized, and the electrolytic solution cannot be prevented from infiltrating into the pore structure inside the particles, which resulted in limited improvement of the battery's cycling performance and storage performance.

In the preparation of the carbon material in Comparative Example 6, the filling material was filled into all the pore structures of the natural spherical graphite particles by vacuuming, and there was no pore structure in the carbon material particles obtained at this time, which lead to a larger change in the volume of the carbon material in the process of active ions' intercalation an deintercalation, and the particles was easier to break, which lead to a limited improvement in the cycling performance and storage performance of the battery.

It should be noted that the present application is not limited to the above implementations. The above implementations are only examples, and all implementations having compositions and effects substantially identical to the technical concept of the present application are included in the scope of the present application. In addition, without deviating from the gist of the present application, various variations applied to the implementations that could be conceived by those skilled in the art and other modes constructed by combining some elements of the implementations are also included in the scope of the present application.

## Claims

1. A carbon material comprising a pore structure, wherein the carbon material satisfies 0.150 ≤ I_{D}/I_{G} ≤ 0.280, with I_{D} indicating an intensity of the D peak of the Raman spectrum at 1350±50 cm⁻¹ and I_{G} indicating an intensity of the G peak of the Raman spectrum at 1580±50 cm⁻¹.

2. The carbon material according to claim 1, wherein 0.152 ≤ I_{D}/I_{G} ≤ 0.280, optionally 0.155 ≤ I_{D}/I_{G} ≤ 0.220.

3. The carbon material according to claim 1 or 2, wherein the carbon material comprises more than one pore structure having a pore area greater than or equal to 0.15 µm², optionally comprising more than one pore structure having a pore area of 0.15 µm²-2.0 µm².

4. The carbon material according to any one of claims 1 to 3, wherein the carbon material comprises an external region and an internal region disposed on the inside of the external region, the external region being a region formed by extending for a distance of 0.25L from the surface of the particles of the carbon material towards the interior of the particles, L being a short-axis length of the particles of the carbon material; total pore area of the external region being denoted as S₁ and total pore area of the internal region being denoted as S₂, and S₂ > S₁.

5. The carbon material according to claim 4, wherein 1.5 ≤ S₂/S₁ ≤ 450, optionally 2 ≤ S₂/S₁ ≤ 400.

6. The carbon material according to claim 4 or 5, wherein
0.01µm² ≤ S₁ ≤ 5.0µm², optionally 0.02µm² ≤ S₁ ≤ 4.5µm²; and/or
2.5µm² ≤ S₂ ≤ 25.0µm², optionally 3.0µm² ≤ S₂ < 22.5µm².

7. The carbon material according to any one of claims 4 to 6, wherein L ≥ 4 µm, optionally 4 µm ≤ L ≤ 20 µm.

8. The carbon material according to any one of claims 4 to 7, wherein
the pore structure in the external region of the carbon material has an area of less than or equal to 0.15 µm², optionally less than or equal to 0.10 µm²; and/or
the internal region of the carbon material comprises more than one pore structure having an area of greater than or equal to 0.15 µm², optionally more than one pore structure having an area of from 0.15 µm² to 2.0 µm².

9. The carbon material according to any one of claims 4 to 8, wherein the interlayer spacing of the external region of the carbon material is denoted as d₁, the interlayer spacing of the internal region of the carbon material is denoted as d₂, and the carbon material satisfies d₁ ≥ d₂;
optionally d₁ > d₂;
optionally d₁ is from 0.33565 nm to 0.33620 nm;
optionally d₂ is from 0.33557 nm to 0.33589 nm.

10. The carbon material according to any one of claims 1 to 9, wherein the carbon material satisfies at least one of the following conditions:
(1) the carbon material has a specific surface area of ≤ 2.1m²/g, optionally from 0.7 m²/g to 1.8 m²/g;
(2) the carbon material has a volume distribution particle size Dv50 of from 6.0 µm to 30.0 µm, optionally from 8.0 µm to 25.0 µm;
(3) the carbon material has a volume distribution particle size Dv90 of from 16.0 µm to 45.0 µm, optionally from 17.0 µm to 42.0 µm;
(4) the carbon material has a particle size distribution (Dv90-Dv10)/Dv50 of ≤1.55, optionally from 0.5 to 1.50.

11. The carbon material according to any one of claims 1 to 10, wherein the carbon material satisfies at least one of the following conditions:
(1) the carbon material has a powder resistivity under a pressure of 8 MPa of from 0.006 Ω.cm to 0.051 Ω.cm, optionally from 0.010 Ω.cm to 0.040 Ω.cm;
(2) the carbon material has a powder compaction density under a pressure of 20000N of 1.70 g/cm³ to 1.95 g/cm³, optionally from 1.72g/cm³ to 1.92g/cm³;
(3) the carbon material has a tap density of from 0.8g/cm³ to 1.35g/cm³, optionally from 0.85g/cm³ to 1.30g/cm³;
(4) the carbon material has a specific capacity of from 350mAh/g to 372mAh/g, optionally from 353mAh/g to 371mAh/g;
(5) the carbon material has a graphitization degree of from 92.0% to 98.0%, optionally from 92.5% to 97.6%;
(6) the carbon material has the morphology comprising one or more of blocky, spherical, and quasi-spherical shapes.

12. A method for preparing a carbon material, comprising the following steps: Step 1, providing a raw material having multiple pore structures; Step 2, mixing the raw material with a filling material in a predetermined ratio homogeneously, and then holding at a first temperature T₁ for a first time t₁ to obtain an intermediate; Step 3, holding the obtained intermediate at a second temperature T₂ for a second time t₂ to obtain a carbon material, wherein the carbon material comprises a pore structure, wherein the carbon material satisfies 0.150 ≤ I_{D}/I_{G} ≤ 0.280, with I_{D} indicating an intensity of the D peak of the Raman spectrum at 1350±50 cm⁻¹ and I_{G} indicating an intensity of the G peak of the Raman spectrum at 1580±50 cm⁻¹.

13. The method according to claim 12, wherein the raw material satisfies at least one of the following conditions:
(1) the raw material comprises natural graphite, optionally the natural graphite comprises one or more of flake graphite, natural spherical graphite, and microcrystalline graphite;
(2) the raw material has a volume distribution particle size Dv50 of from 6.0 µm to 30.0 µm, optionally from 8.0 µm to 25.0 µm;
(3) the raw material has a specific surface area of ≥ 2.5 m²/g, optionally from 2.5 m²/g to 10.0 m²/g.

14. The method according to claim 12 or 13, wherein the filling material satisfies at least one of the following conditions:
(1) the filling material has a softening point of from 100°C to 180°C, optionally from 120°C to 160°C,
(2) the filling material has a coking value of from 25% to 50%, optionally from 30% to 42%;
(3) the filling material has a volume distribution particle size Dv50 of less than or equal to 6 µm, optionally from 1 µm to 5 µm.

15. The method according to claim 14, wherein the filling material comprises one or more of coal asphalt, petroleum asphalt, polymer compounds and resins, optionally one or more of coal asphalt and petroleum asphalt.

16. The method according to any one of claims 12 to 15, wherein a mass ratio of the filling material to the raw material is (10-32):100, optionally (15-25):100.

17. The method according to any one of claims 12 to 16, wherein after mixing the raw material and the filling material in a predetermined ratio homogeneously, they are heated to the first temperature T₁ by a staged heating process, optionally including a first heating process, a second heating process and a third heating process.

18. The method according to claim 17, wherein
the first heating process is carried out by heating to a temperature of from 200°C to 250°C and holding at this temperature for 1 to 2 hours; and/or
the second heating process is carried out by heating to a temperature of from 450°C to 550°C and holding at this temperature for 1 to 2 hours; and/or
the third heating process is carried out by heating to the first temperature T₁ and holding at the first temperature T₁ for a first time t₁.

19. The method according to any one of claims 12 to 18, wherein it is heated to the first temperature T₁ at a rate of 1°C/min-10°C/min.

20. The method according to any one of claims 12 to 19, wherein
the first temperature T₁ is from 700°C to 1200°C, optionally from 720 to 1100°C; and/or
the first time t₁ is from 1 hour to 5 hours, optionally from 2 hours to 4 hours.

21. The method according to any one of claims 12 to 20, wherein
the second temperature T₂ is from 1800°C to 2600°C, optionally from 1900°C to 2450°C; and/or
the second time t₂ is from 1.5 hours to 6 hours, optionally from 2 hours to 5 hours.

22. A secondary battery, comprising a negative electrode plate comprising the carbon material according to any one of claims 1 to 11 or the carbon material prepared by the method according to any one of claims 12 to 21.

23. An electrical device, comprising the secondary battery according to claim 22.
